# EUROPEAN PATENT APPLICATION

(11) **EP 3 404 473 A1**
(43) Date of publication of application: **21.11.2018**
(21) Application number: 18172992.2
(22) Date of filing: 17.05.2018
(51) Int. Cl.: G02F 1/1335, G02B 6/00

(54) **BACKLIGHT MODULE AND DISPLAY DEVICE CONTAINING THE SAME**

(30) Priority: 19.05.2017 US 201762508469 P; 12.09.2017 CN 201710817295
(71) Applicant: InnoLux Corporation, Jhu-Nan, Miao-Li County 350 (TW)
(72) Inventor: WANG, Hui-Chi, 350 Miao-Li County (TW); CHEN, Yen-Liang, 350 Miao-Li County (TW); LIN, Fang-Ho, 350 Miao-Li County (TW); TING, Chin-Lung, 350 Miao-Li County (TW); LIN, Ting-Yen, 350 Miao-Li County (TW)
(74) Representative: 2K Patentanwälte Blasberg Kewitz & Reichel

(57) **Abstract**

A display device (100) is provided. The display device includes a backlight module (200) and a display panel (302). The backlight module includes a light guiding plate (202), a first light source component (204) and a reflection component (206). The light guiding plate has a first side, a second side, a third side and a fourth side, wherein the first side is disposed opposite to the third side, and the second side is disposed opposite to the fourth side. The first light source component is disposed adjacent to the first side of the light guiding plate. The reflection component is disposed opposite to the light guiding plate. The first light source component is attached to the light guiding plate or the reflection component. The light guiding plate is disposed between the display panel and the reflection component.

## Description

### CROSS REFERENCE TO RELATED APPLICATIONS

This application claims priority of U.S. Provisional Patent Application No. 62/508,469, filed on May 19, 2017 and Chinese Patent Application No. 201710817295.5, filed on September 12, 2017, the entirety of which is incorporated by reference herein.

### BACKGROUND

### Technical Field

The disclosure relates to a light source module and in particular relates to a backlight module and a display device containing the backlight module.

### Description of the Related Art

With the advances being made in the development of digital technology, display devices are now widely used in various aspects of our daily lives. For example, display devices have found wide applications in modern information appliances such as televisions, computers, mobile phones, smartphones, and so on. In addition, display devices are continuously being developed with the goal of making them thinner, lighter, more aesthetic, and multi-functional.

Along with the great popularity of such display devices, they are highly valued for their appearance, design, and additional functionality. Conventionally, the outer frame of a display device is formed of metallic materials. In the current industry, plastic materials may also be used to replace the conventionally used metallic materials to manufacture the outer frame. However, regardless of whether the outer frames are made of metal or plastic, both will have a certain thickness and weight. Therefore, the development of thinner display devices will be limited by the outer frames' size or thickness, or the strength of the assembly structure.

Accordingly, in order to meet the market demand of display devices, it is desirable for the current industry to develop a display device with a thinner, lighter and firmer structure or having multiple additional functions.

### SUMMARY

In accordance with some embodiments, the present disclosure provides a backlight module, including a light guiding plate, a first light source component and a reflection component. The light guiding plate has a first side, a second side, a third side and a fourth side, wherein the first side is disposed opposite to the third side, and the second side is disposed opposite to the fourth side. The first light source component is disposed adjacent to the first side of the light guiding plate. The reflection component is disposed opposite to the light guiding plate, wherein the first light source component is attached to the light guiding plate or the reflection component.

In accordance with some embodiments, the present disclosure provides a display device including a backlight module and a display panel. The backlight module includes a light guiding plate, a first light source component and a reflection component. The light guiding plate has a first side, a second side, a third side and a fourth side, wherein the first side is disposed opposite to the third side, and the second side is disposed opposite to the fourth side. The first light source component is disposed adjacent to the first side of the light guiding plate. The reflection component is disposed opposite to the light guiding plate, wherein the first light source component is attached to the light guiding plate or the reflection component. The light guiding plate is disposed between the display panel and the reflection component.

A detailed description is given in the following embodiments with reference to the accompanying drawings.

### BRIEF DESCRIPTION OF THE DRAWINGS

The disclosure may be more fully understood by reading the subsequent detailed description and examples with references made to the accompanying drawings, wherein:
Fig. 1A illustrates a front view of the display device in accordance with some embodiments of the present disclosure;
Fig. 1B illustrates a cross-sectional view of the display device along line A-A' in Fig. 1A in accordance with some embodiments of the present disclosure;
Fig. 2 illustrates a cross-sectional view of the display device along line A-A' in Fig. 1A in accordance with some other embodiments of the present disclosure;
Fig. 3 illustrates a cross-sectional view of the display device along line A-A' in Fig. 1A in accordance with some other embodiments of the present disclosure;
Fig. 4 illustrates a cross-sectional view of the display device along line A-A' in Fig. 1A in accordance with some other embodiments of the present disclosure;
Fig. 5 illustrates a cross-sectional view of the display device along line A-A' in Fig. 1A in accordance with some other embodiments of the present disclosure;
Fig. 6 illustrates a cross-sectional view of the display device along line A-A' in Fig. 1A in accordance with some other embodiments of the present disclosure;
Fig. 7A illustrates a front view of the display device in accordance with some embodiments of the present disclosure;
Fig. 7B illustrates a cross-sectional view of the display device along line B-B' in Fig. 7A in accordance with some embodiments of the present disclosure;
Fig. 8 illustrates a cross-sectional view of the display device along line B-B' in Fig. 7A in accordance with some other embodiments of the present disclosure;
Fig. 9 illustrates a cross-sectional view of the display device along line B-B' in Fig. 7A in accordance with some other embodiments of the present disclosure;
Fig. 10 illustrates a cross-sectional view of the display device along line B-B' in Fig. 7A in accordance with some other embodiments of the present disclosure;
Fig. 11 illustrates a cross-sectional view of the display device along line B-B' in Fig. 7A in accordance with some other embodiments of the present disclosure;
Fig. 12 illustrates a cross-sectional view of the display device along line B-B' in Fig. 7A in accordance with some other embodiments of the present disclosure;
Fig. 13A and Fig. 13B are diagrams showing the attachment between the light guiding plate and the reflection component in accordance with some embodiments of the present disclosure;
Figs. 14A-14D are diagrams showing the attachment between the reflection element and the structural element in accordance with some embodiments of the present disclosure;
Fig. 15A and Fig. 15B are diagrams showing the bending portion of the reflection element in accordance with some embodiments of the present disclosure;
Figs. 16A-16C are diagrams showing the bending portion of the reflection element at the light incident side of the light guiding plate in accordance with some embodiments of the present disclosure;
Fig. 16D illustrates a cross-sectional view of the reflection element along line C-C' in Fig. 16C in accordance with some other embodiments of the present disclosure;
Fig. 17A illustrates a top view of the first light source component in accordance with some embodiments of the present disclosure;
Fig. 17B and Fig. 17C illustrate the top views of the first light source component and the second light source component in accordance with some embodiments of the present disclosure;
Fig. 18A illustrates a partially enlarged figure of the region M as shown in Fig. 17A;
Figs. 18B-18I illustrate the partial cross-sectional views of the light source component along line D-D' in Fig. 18A in accordance with some other embodiments of the present disclosure;
Figs. 19A-19D are diagrams showing the attachment between the light source component and the light guiding plate in accordance with some embodiments of the present disclosure;
Fig. 20A and Fig. 20B illustrate the top views of the first light source component and the second light source component in accordance with some embodiments of the present disclosure;
Fig. 20C and Fig. 20D are diagrams showing the attachment between the light source component and the light guiding plate in accordance with some embodiments of the present disclosure.

### DETAILED DESCRIPTION

The backlight module of the present disclosure and the display device containing the backlight module are described in detail in the following description. In the following detailed description, for purposes of explanation, numerous specific details and embodiments are set forth in order to provide a thorough understanding of the present disclosure. The specific elements and configurations described in the following detailed description are set forth in order to clearly describe the present disclosure. It will be apparent, however, that the exemplary embodiments set forth herein are used merely for the purpose of illustration, and the inventive concept may be embodied in various forms without being limited to those exemplary embodiments. In addition, the drawings of different embodiments may use like and/or corresponding numerals to denote like and/or corresponding elements in order to clearly describe the present disclosure. However, the use of like and/or corresponding numerals in the drawings of different embodiments does not suggest any correlation between different embodiments. In addition, in this specification, expressions such as "first material layer disposed on/over a second material layer", may indicate the direct contact of the first material layer and the second material layer, or it may indicate a noncontact state with one or more intermediate layers between the first material layer and the second material layer. In the above situation, the first material layer may not be in direct contact with the second material layer.

It should be noted that the elements or devices in the drawings of the present disclosure may be present in any form or configuration known to those with ordinary skill in the art. In addition, the expressions "a layer overlying another layer", "a layer is disposed above another layer", "a layer is disposed on another layer" and "a layer is disposed over another layer" may indicate that the layer is in direct contact with the other layer, or that the layer is not in direct contact with the other layer, there being one or more intermediate layers disposed between the layer and the other layer.

In addition, in this specification, relative expressions are used. For example, "lower", "bottom", "higher" or "top" are used to describe the position of one element relative to another. It should be appreciated that if a device is flipped upside down, an element that is "lower" will become an element that is "higher".

It should be understood that, although the terms first, second, third etc. may be used herein to describe various elements, components, regions, layers, portions and/or sections, these elements, components, regions, layers, portions and/or sections should not be limited by these terms. These terms are only used to distinguish one element, component, region, layer, portion or section from another region, layer or section. Thus, a first element, component, region, layer, portion or section discussed below could be termed a second element, component, region, layer, portion or section without departing from the teachings of the present disclosure.

It should be understood that this description of the exemplary embodiments is intended to be read in connection with the accompanying drawings, which are to be considered part of the entire written description. The drawings are not drawn to scale. In addition, structures and devices are shown schematically in order to simplify the drawing.

The terms "about" and "substantially" typically mean +/- 20% of the stated value, more typically +/- 10% of the stated value, more typically +/- 5% of the stated value, more typically +/- 3% of the stated value, more typically +/- 2% of the stated value, more typically +/- 1% of the stated value and even more typically +/- 0.5% of the stated value. The stated value of the present disclosure is an approximate value. When there is no specific description, the stated value includes the meaning of "about" or "substantially".

Unless defined otherwise, all technical and scientific terms used herein have the same meaning as commonly understood by one of ordinary skill in the art to which this disclosure belongs. It should be appreciated that, in each case, the term, which is defined in a commonly used dictionary, should be interpreted as having a meaning that conforms to the relative skills of the present disclosure and the background or the context of the present disclosure, and should not be interpreted in an idealized or overly formal manner unless so defined.

In addition, in some embodiments of the present disclosure, terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

The light guiding plate, the light source component and the reflection component in the backlight module provided in the present disclosure are attached using a specific attachment method so that the components such as the side frame, front frame or back panel and so on may be omitted. Therefore, the display device formed of the backlight module may be lighter and thinner or have an integrated outer appearance. In accordance with some embodiments of the present disclosure, the backlight module may include various designs of the light source component or the exterior element so that the light source component not only may serve as a light source of the display panel but also may serve as an ambient light. In addition, the light source of the display panel and the ambient light source may be powered separately and not affected by the other.

In addition, the present disclosure also provides various aspects showing the method of forming or assembling the backlight module component so as to simplify the processing difficulty or reduce the cost of manufacture.

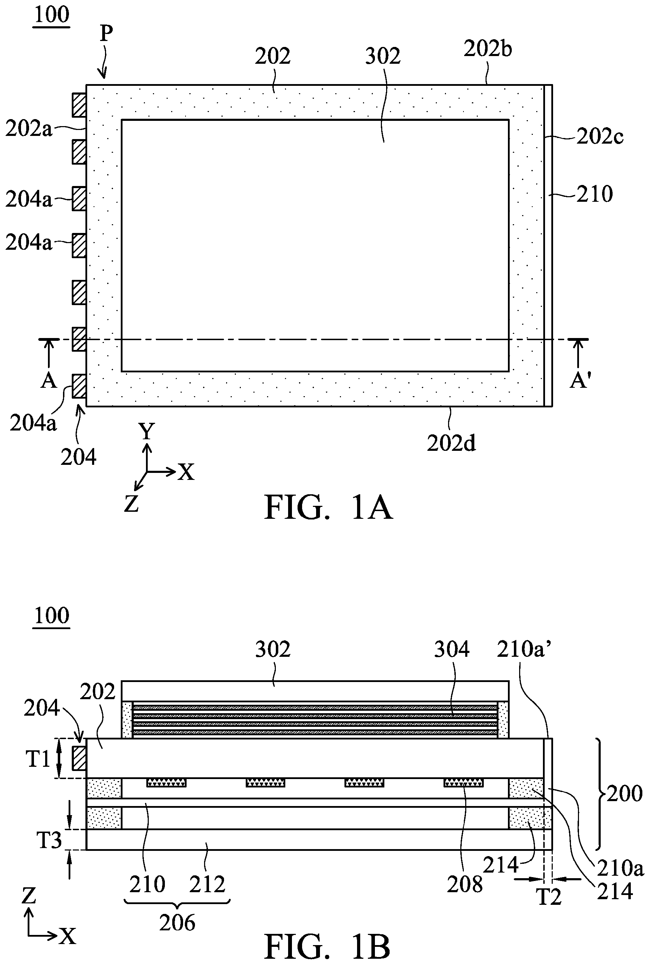

Fig. 1A illustrates a front view of the display device 100 in accordance with some embodiments of the present disclosure, i.e. the diagram of the display device 100 in the X-Y plane. Fig. 1B illustrates a cross-sectional view of the display device 100 along line A-A' in Fig. 1A, i.e. the cross-sectional view of the display device 100 in the X-Z plane. It should be understood that some of the components of the display device such as the case, heat sink or bracket and so on may be omitted in the figures for clarify. It should be understood that the components described above may be arranged in any suitable way that is known in the art.

Referring to Fig. 1A and Fig. 1B, the display device 100 includes a backlight module 200 and a display panel 302. The display panel 302 may be disposed at the side of the light emitting surface of the backlight module 200. The display device 100 may further include a plurality of optical films 304. The optical films 304 may be disposed between the display panel 302 and the backlight module 200.

The display panel 302 may be, but is not limited to, a twisted nematic (TN) liquid-crystal display, a super twisted nematic (STN) liquid-crystal display, a double layer super twisted nematic (DSTN) liquid-crystal display, a vertical alignment (VA) liquid-crystal display, an in-plane switching (IPS) liquid-crystal display, a cholesteric liquid-crystal display, a blue phase liquid-crystal display, a fringe-field switching (FFS) liquid-crystal display, or any other suitable liquid-crystal display. In addition, the optical film 304 may include, but is not limited to, a reflective film, a diffuser film, a brightness enhancement film, any other suitable optical film that may be used in the display panel, or a combination thereof.

Still referring to Fig. 1A and Fig. 1B, the backlight module 200 may include a light guiding plate 202, a first light source component 204 and a refection component 206. The light guiding plate 202 is disposed opposite to the display panel 302. The light guiding plate 202 has a first side 202a, a second side 202b, a third side 202c and a fourth side 202d. The first side 202a is disposed opposite to the third side 202c, and the second side 202b is disposed opposite to the fourth side 202d. The first light source component 204 may be attached to the light guiding plate 202 or the refection component 206. The light guiding plate 202 may convert the light beam generated from the first light source component 204 into surface light source, and may transmit the light from the side close to the first light source component 204 (e.g., the first side 202a) to the side away from the first light source component 204 (e.g., the third side 202c) so that the brightness or luminance of the panel may be increased or controlled. In particular, the light guiding plate 202 may alter the transmitting angle of the light by the dots 208 formed thereon to impair total reflection of the light. As such, the light may be guided to the light emitting surface of the light guiding plate 202, i.e. the surface that is adjacent to the display panel 302.

The material of the light guiding plate 202 may include, but is not limited to, glass, polymethylmethacrylate (PMMA), cycloolefin polymer (COP), Polycarbonate (PC), any other suitable material, or a combination thereof. The dots 208 may be formed of transparent ink, black ink, any other material suitable for diffusing light, or ink with any other suitable color. The dots 208 may be formed by dot printing or any other suitable technique. In accordance with some embodiments of the present disclosure, the thickness T1 of the light guiding plate 202 may be in a range from about 1 mm to about 5 mm, such as from about 1.5 mm to about 2.5 mm.

Still referring to Fig. 1A and Fig. 1B, the first light source component 204 is adjacent to the first side 202a of the light guiding plate 202. In other words, the first side 202a of the light guiding plate 202 corresponds to the luminous surface of the first light source component 204. In this embodiment, the first light source component 204 is disposed corresponding to the light guiding plate 202. In particular, the first light source component 204 is disposed corresponding to the first side 202a of the light guiding plate 202. In one embodiment, the first light source component 204 may be attached to the light guiding plate 202. For example, the first light source component 204 may be attached to the light guiding plate 202 through an adhesive material. Alternatively, the first light source component 204 may be attached to the light guiding plate 202 through a mechanical element, but it is not limited thereto.

The first light source component 204 may include a plurality of first light-emitting elements 204a. The first light-emitting element 204a may include, but is not limited to, light-emitting diode (LED), micro light-emitting diode (micro LED), mini light-emitting diode (mini LED), quantum dot (QD) materials, fluorescence materials, phosphor materials, or any other suitable light-emitting element or material. In one embodiment, the chip size of the light-emitting diode may be in a range from about 300 µm to about 10 mm. The chip size of the mini light-emitting diode may be in a range from about 100 µm to about 300 µm. The chip size of the micro light-emitting diode may be in a range from about 1 µm to about 100 µm, but the disclosure is not limited thereto. It should be understood that although the embodiment shown in Fig. 1A and Fig. 1B only illustrates the first light source component 204, the backlight module 200 may also have a second light source component or a third light source component and so on in accordance with some other embodiments. Details will be described hereinafter.

Still referring to Fig. 1B, the reflection component 206 and the light guiding plate 202 are disposed opposite to each other. In other words, the light guiding plate 202 is disposed between the reflection component 206 and the display panel 302. The reflection component 206 may reflect the light that penetrates out of the light guiding plate 202 back into the light guiding plate 202. Thus, the loss of light may be decreased or the utilization of light may be increased. The reflection component 206 may also have the function similar to the exterior element or the supporting element. In addition, the reflection component 206 may further include a reflection element 210 and a structural element 212, and the reflection element 210 and the structural element 212 are adjacent to each other.

The material of the reflection element 210 may include any suitable material having reflective feature. For example, the material of the reflection element 210 may include, but is not limited to, polyester resin (e.g., polyethylene terephthalate (PET) or polyethylene naphthalate (PEN)), olefin resin, polycarbonate resin, cycloolefin resin, polypropylene (PP), any other suitable material that may be used in the reflection element, or a combination thereof. The reflection element 210 may possess the reflectivity in a range from about 70% to about 100%, such as from about 90% to about 100%. In accordance with some embodiments of the present disclosure, the thickness T2 of the reflection element 210 may be in a range from about 100 µm to about 500 µm, such as about 300 µm.

Moreover, the material of the structural element 212 may include, but is not limited to, glass, quartz, sapphire, polycarbonate (PC), polyimide (PI), polyethylene terephthalate (PET), plastic, metal, any other suitable material, or a combination thereof. In accordance with some embodiments of the present disclosure, the thickness T3 of the structural element 212 may be in a range from about 0.05 mm to about 1.0 mm. In addition, the size of the structural element 212 may be larger than or equal to the size of the light guiding plate 202 or the reflection element 210. In accordance with some embodiments of the present disclosure, the size of the structural element 212 may be larger than that of the light guiding plate 202. Therefore, the structural element 212 will be exposed when it is observed from the front view perspective, and may serve as a decorative frame of the display device 100.

In addition, the light guiding plate 202 and the reflection component 206 may be attached to each other by the adhesive material 214. The reflection element 210 and the structural element 212 of the reflection component 206 may be attached to each other by the adhesive material 214. The adhesive material 214 may include, but is not limited to, liquid optical gel, solid optical gel, any other suitable material, or a combination thereof. The adhesive material 214 may be, but is not limited to, transparent, black or any suitable color according to the needs. The attachment methods between the light guiding plate 202 and the reflection component 206, and between the reflection element 210 and the structural element 212 will be described in detail hereinafter.

Still referring to Fig. 1A and Fig. 1B, in the embodiment shown in Fig. 1B, the reflection element 210 is disposed between the light guiding plate 202 and the structural element 212. The reflection element 210 may include a first bending portion 210a. The first bending portion 210a is adjacent to the third side 202c of the light guiding plate 202. In particular, the first bending portion 210a extends at the third side 202c of the light guiding plate 202. In accordance with some embodiments of the present disclosure, the first bending portion 210a contacts the third side 202c of the light guiding plate 202. In accordance with some embodiments of the present disclosure, a top surface 210a' of the first bending portion 210a may be substantially level with the top surface of the light guiding plate 202. In addition, the third side 202c of the light guiding plate 202 corresponds to the side that is away from the first light source component 204 (the side that is away from the light source). Therefore, the first bending portion 210a extending at the third side 202c of the light guiding plate 202 may substantially decrease light leakage at the side that is away from the light source or substantially maintain the brightness or luminance of the panel.

Moreover, the first bending portion 210a may be formed by forming the sewing line (dotted line) on the reflection element 210 and bending along the sewing line. In other words, the reflection element 210 and the first bending portion 210a may be formed integrally, but it is not limited thereto. In some other embodiments of the present disclosure, the reflection element 210 and the first bending portion 210a may be separated elements and combined to each other by assembly or adhesion, but it is not limited thereto. The method for forming the reflection element 210 and the bending portion will be described in detail hereinafter.

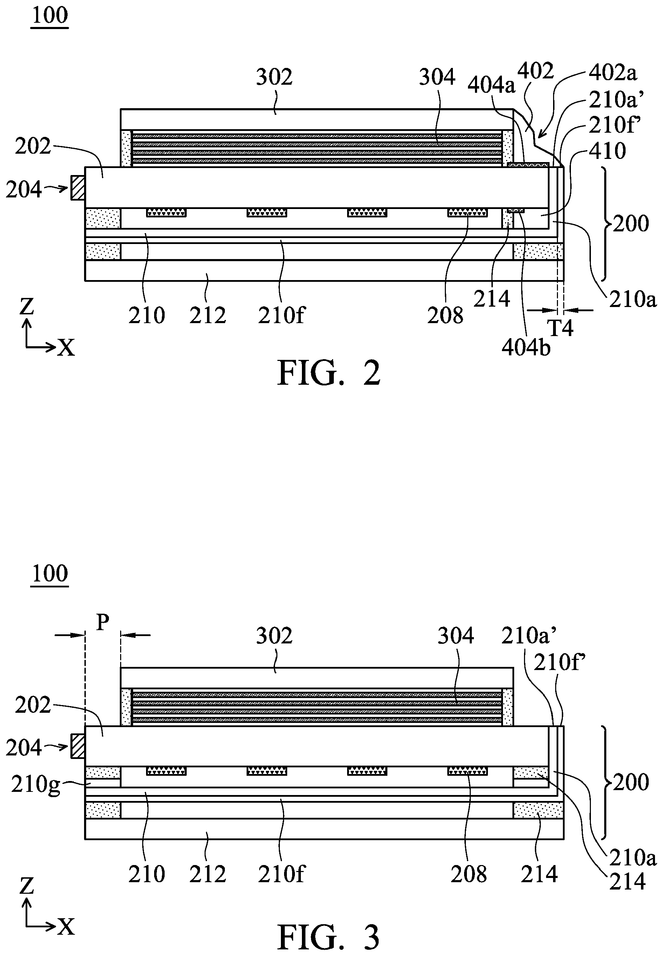

In addition, the reflection component 206 may include decorative patterns. In particular, the reflection element 210 and/or the structural element 212 may further include a decorative layer 210f formed thereon (as shown in Fig. 2 and Fig. 3). The decorative layer 210f may include any pattern or logo and so on. In one embodiment, the decorative layer 210f may be a film and attached to the reflection element 210 by adhesion. Alternatively, the decorative layer 210f may be a coating layer or printing layer formed on the reflection element 210. The decorative layer 210f may also be formed or disposed on the reflection element 210 by any other suitable method. In one embodiment, the pattern or the logo may be formed by a printing process, a laser process, or any other suitable method. In accordance with some embodiments of the present disclosure, the ready-made pattern or logo may be directly adhered to the reflection element 210 and/or the structural element 212. In accordance with some embodiments of the present disclosure, the pattern or the logo may be a hollowed portion in the decorative layer 210f.

Fig. 2 illustrates a cross-sectional view of the display device 100 along line A-A' in Fig. 1A (the cross-sectional view in the X-Z plane) in accordance with some other embodiments of the present disclosure. As shown in Fig. 2, in particular embodiments, the material of the structural element 212 may have a transparent or semi-transparent feature. For example, when the material of the structural element 212 is colorless glass, colored glass, colorless plastic, colored plastic, colorless metal or colored metal, the side of the reflection element 210 that is adjacent to the structural element 212 may further include the decorative layer 210f. As such, the decorative layer 210f of the reflection element 210 may present decorative effect through the structural element 212 having the transparent or semi-transparent feature. In accordance with some embodiments of the present disclosure, a top surface 210f' of the decorative layer 210f may be substantially level with the top surface of the light guiding plate 202. In accordance with some embodiments of the present disclosure, the top surface 210f of the decorative layer 210f also may be substantially level with the top surface 210a' of the first bending portion 210a. In addition, in accordance with some embodiments of the present disclosure, the thickness T4 of the decorative layer 210f may be in a range from about 50 µm to about 1000 µm, such as 188 µm. It should be understood that, although a portion of the decorative layer 210f extends and is disposed corresponding to the first bending portion 210a in the embodiment shown in Fig. 2, the decorative layer 210f may not extend and only be disposed at the surface of the reflection element 210 that is adjacent to the structural element 212 in some other embodiments. Please refer to Fig. 1A and Fig. 2. In some embodiments, the display device 100 may further include a protective element 402 disposed corresponding to at least a side surface of the display panel 302, a part of the light guiding plate 202, the top surface 210a' of the first bending portion 210a and the top surface 210f' of the decorative layer 210f, but it is not limited thereto in the present disclosure. In other embodiments, the protective element 402 may not contact the top surface 210a' of the first bending portion 210a or the top surface 210f of the decorative layer 210f. In some embodiments, the protective element 402 may have a concave portion 402a as shown in Fig. 2, however, the protective element 402 also may be rectangular, triangular, curved, convex, or any other shape in accordance with some other embodiments. In some embodiments, the light guiding plate 202 may comprise a region P, and the region P is a region of the light guiding plate 202 that is not overlapped with the display panel 302 in the direction Z (as shown in Fig. 1A). The protective element 402 may be disposed in at least a part of the region P of the light guiding plate 202. In one embodiment, the protective element 402 may be disposed in a part of the region P which corresponds to the second side 202b, the third side 202c and the fourth side 202d of the light guiding plate 202, but it is not limited thereto in the present disclosure. The protective element 402 may be disposed at any suitable position according to needs. In some embodiments, the material of the protective element 402 may be the same as or different from the material of the adhesive material 214 mentioned above. The protective element 402 may be used to protect the part of the light guiding plate 202 exposed (not covered by the display panel 302, a frame or other components in the direction Z) in the display device 100 from being damaged. In some embodiments, the display device 100 may further include a first light-shielding element 404a disposed between the protective element 402 and the light guiding plate 202. The first light-shielding element 404a may overlap a portion of the light guiding plate 202 and a portion of the display panel 302 in the direction Z in accordance with some embodiments. In other embodiments, the first light-shielding element 404a may also overlap the top surface 210a' of the first bending portion 210a or the top surface 210f' of the decorative layer 210f in the direction Z, but it is not limited thereto in the present disclosure. In some embodiments, the display device 100 may further include a second light-shielding element 404b disposed between the reflection element 210 and the light guiding plate 202. In some embodiments, the adhesive material 214, the light guiding plate 202, the reflection element 210 and the first bending portion 210a may form a space 410 as shown in Fig. 2. A part of the second light-shielding element 404b may be disposed in the space 410 and a part of the second light-shielding element 404b may overlap the adhesive material 214 in the direction Z, but it is not limited thereto in the present disclosure. In other embodiments, the second light-shielding element 404b can be disposed in the space 410 and may not overlap the adhesive material 214 in the direction Z. In other embodiments, the space 410 may not be formed, and the adhesive material 214 may contact the light guiding plate 202, the reflection element 210 and the first bending portion 210a, and the second light-shielding element 404b may be disposed between the adhesive material 214 and the light guiding plate 202. In some embodiments, the first light-shielding element 404a and the second light-shielding element 404b may be formed by ink printing method or any other suitable method. The first light-shielding element 404a and the second light-shielding element 404b may be disposed to shield a part of the light to improve the display quality.

Fig. 3 illustrates a cross-sectional view of the display device 100 along line A-A' in Fig. 1A (the cross-sectional view in the X-Z plane) in accordance with some other embodiments of the present disclosure. As shown in Fig. 3, in another particular embodiment, when the material of the light guiding plate 202 is transparent or semi-transparent, the side of the reflection element 210 that is adjacent to the light guiding plate 202 may further include a decorative frame 210g. Specifically, referring to Fig. 1A and Fig. 3, the position of the decorative frame 210g may correspond to the region P of the light guiding plate 202 that is not shielded by the display panel 302. As such, the decorative frame 210g of the reflection element 210 may present decorative effect through the transparent or semi-transparent light guiding plate 202 from the front view perspective (in the direction Z). In accordance with some embodiments of the present disclosure, the decorative frame 210g may be disposed corresponding to at least one of the first side 202a, the second side 202b, the third side 202c and the fourth side 202d of the light guiding plate 202. It should be understood that, although the reflection element 210 has the decorative layer 210f and the decorative frame 210g in the embodiment shown in Fig. 3, the reflection element 210 may not have the decorative layer 210f in some other embodiments.

In another embodiment, the material of the structural element 212 may have a transparent or semi-transparent feature. For example, when the material of the structural element 212 may be colorless glass, colored glass, colorless plastic, colored plastic, colorless metal, colored metal, a laser process may be further performed on the structural element 212 so as to form a pattern or a logo on the structural element 212 or in the structural element 212. The laser process may include, but is not limited to, an inner engraving process, a buried engraving process, or an outer engraving process and so on.

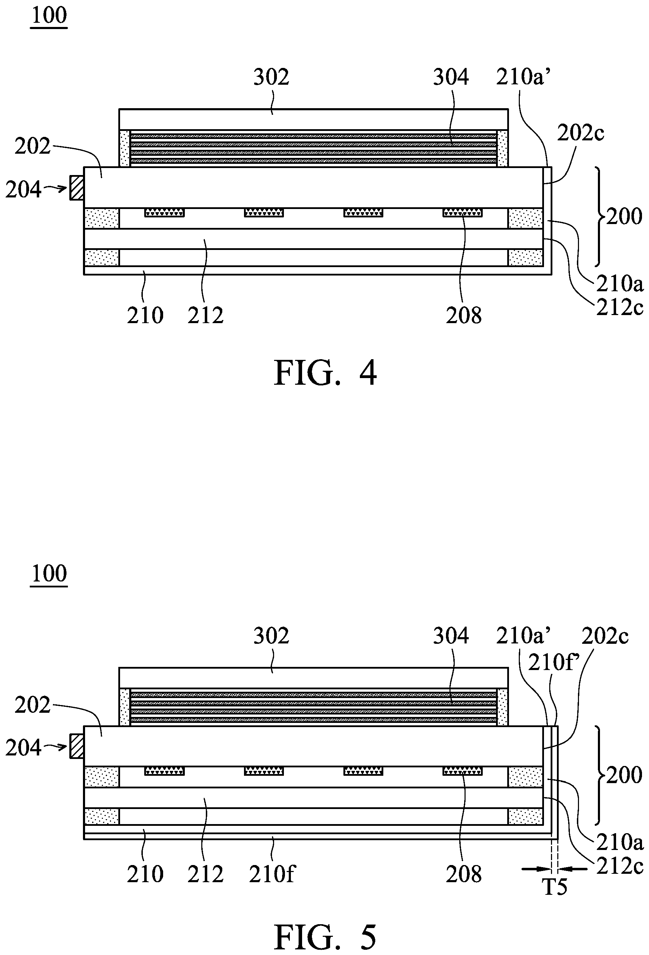

Next, referring to Fig. 4, Fig. 4 illustrates a cross-sectional view of the display device 100 along line A-A' in Fig. 1A (the cross-sectional view in the X-Z plane) in accordance with some other embodiments of the present disclosure. It should be understood that the same or similar components or elements in above and below contexts are represented by the same or similar reference numerals. The materials, manufacturing methods and functions of these components or elements are the same or similar to those described above, and thus will not be repeated hereafter.

The difference between the embodiments as shown in Fig. 4 and the embodiment as shown in the above Fig. 1B is that, the structural element 212 is disposed between the light guiding plate 202 and the reflection element 210 in the embodiment shown in Fig. 4. The first bending portion 210a may be extended at the third side 202c of the light guiding plate 202 and a side 212c of the structural element 212. In accordance with some embodiments of the present disclosure, the first bending portion 210a contacts the third side 202c of the light guiding plate 202 and the side 212c of the structural element 212. In accordance with some embodiments of the present disclosure, the top surface 210a' of the first bending portion 210a may be substantially level with the top surface of the light guiding plate 202. In addition, the first bending portion 210a extending at the third side 202c of the light guiding plate 202 and the side 212c of the structural element 212 may also decrease light leakage or light loss at the third side 202c of the light guiding plate 202. It should be noted that in this embodiment, the material of the structural element 212 is substantially transparent or colorless to decrease the light of the first light source component 204 from being absorbed or shielded by the structural element 212. Instead, the light may pass through the structural element 212 and be reflected by the reflection element 210. The reflected light may enter the light guiding plate 202 and be guided to the light emitting surface.

Fig. 5 illustrates a cross-sectional view of the display device 100 along line A-A' in Fig. 1A (the cross-sectional view in the X-Z plane) in accordance with some other embodiments of the present disclosure. As shown in Fig. 5, in one embodiment, the reflection element 210 may further include the decorative layer 210f at a side that is away from the structural element 212. The decorative layer 210f may extend and be disposed corresponding to the first bending portion 210a. As such, the decorative layer 210f of the reflection element 210 may also serve as the exterior element (or outward appearance) of the display device 100, and no other frame is required for the final product. In accordance with some embodiments of the present disclosure, the top surface 210f' of the decorative layer 210f may be substantially level with the top surface of the light guiding plate 202. In accordance with some embodiments of the present disclosure, the top surface 210f' of the decorative layer 210f may also be substantially level with the top surface 210a' of the first bending portion 210a, but the present embodiment is not limited thereto. In some embodiments, the top surface 210a' of the first bending portion 210a or the top surface 210f' of the decorative layer 210f may be higher or lower than the top surface of the light guiding plate 202. In addition, in accordance with some embodiments of the present disclosure, the thickness T5 of the decorative layer 210f may be in a range from about 50 µm to about 1000 µm, such as about 500 µm. In one embodiment, the decorative layer 210f may be a film and attached to the reflection element 210 by adhesion. Alternatively, the decorative layer 210f may be a coating layer or printing layer formed on the reflection element 210. The decorative layer 210f may also be formed or disposed on the reflection element 210 by any other suitable method.

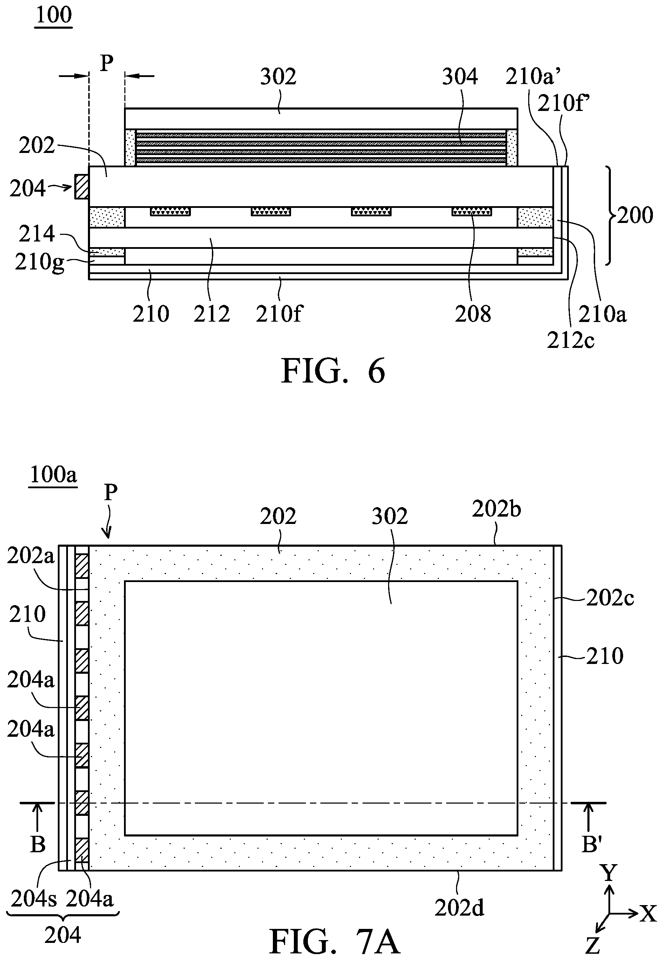

Fig. 6 illustrates a cross-sectional view of the display device 100 along line A-A' in Fig. 1A (the cross-sectional view in the X-Z plane) in accordance with some other embodiments of the present disclosure. As shown in Fig. 6, in another embodiment, when the material of the structural element 212 and the light guiding plate 202 is transparent or semi-transparent, the side of the reflection element 210 that is adjacent to the structural element 212 may further include a decorative frame 210g. Specifically, the position of the decorative frame 210g may correspond to the region P of the light guiding plate 202 (as shown in Fig. 1A). As such, the decorative frame 210g of the reflection element 210 may present decorative effect through the transparent or semi-transparent light guiding plate 202 from the front view perspective. In accordance with some embodiments of the present disclosure, the decorative frame 210g may be disposed corresponding to at least one of the first side 202a, the second side 202b, the third side 202c and the fourth side 202d of the light guiding plate 202.

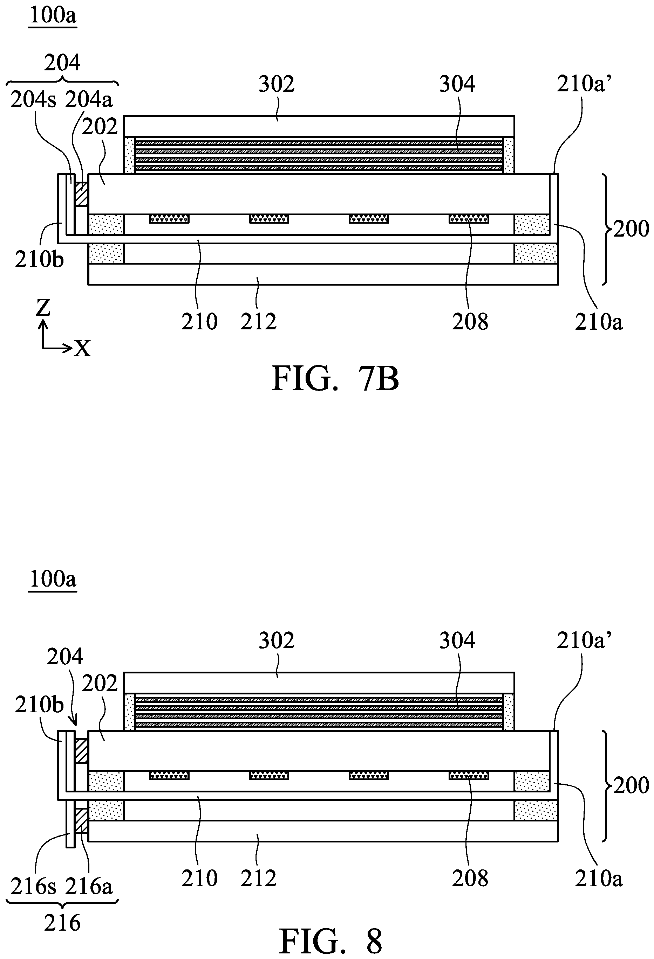

Next, referring to Fig. 7A and Fig. 7B, Fig. 7A illustrates a front view of the display device 100a in accordance with some embodiments of the present disclosure, i.e. the diagram of the display device 100a in the X-Y plane. Fig. 7B illustrates a cross-sectional view of the display device100a along line B-B' in Fig. 7A (the cross-sectional view in the X-Z plane). The difference between the embodiments as shown in Fig. 7A and Fig. 7B, and the embodiments as shown in Fig. 1A and Fig. 1B is that, the reflection element 210 further includes a second bending portion 210b. The second bending portion 210b is disposed adjacent and opposite to the first side 202a of the light guiding plate 202. In addition, the first light source component 204 may be disposed on the second bending portion 210b and corresponding to the first side 202a of the light guiding plate 202. In other words, the first light source component 204 is disposed between the first side 202a of the light guiding plate 202 and the second bending portion 210b of the reflection element 210. In accordance with some embodiments of the present disclosure, besides including the plurality of first light-emitting elements 204a, the first light source component 204 may further include a first substrate 204s. The first light-emitting elements 204a are disposed on the first substrate 204s. In accordance with some embodiments of the present disclosure, the first light source component 204 is attached to the first side 202a of the light guiding plate 202 by at least one first light-emitting element 204a.

As described above, the first light source component 204 may include, but is not limited to, light-emitting diode (LED), micro light-emitting diode (micro LED), mini light-emitting diode (mini LED), quantum dot (QD) materials, fluorescence materials, phosphor materials, or any other suitable light-emitting element or material. In one embodiment, the chip size of the LED may be in a range from about 300 µm to about 10 mm. The chip size of the mini LED may be in a range from about 100 µm to about 300 µm. The chip size of the micro LED may be in a range from about 1 µm to about 100 µm, but the disclosure is not limited thereto. In addition, the material of the first substrate 204s may include, but is not limited to, glass, quartz, sapphire, polycarbonate (PC), polyimide (PI), polyethylene terephthalate (PET), any other suitable material, or a combination thereof.

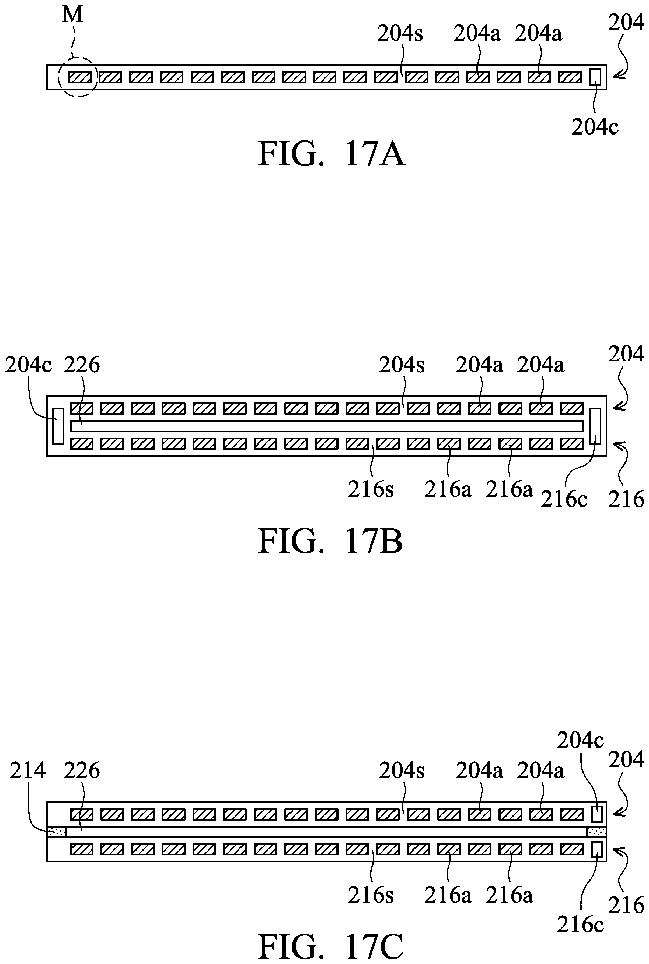

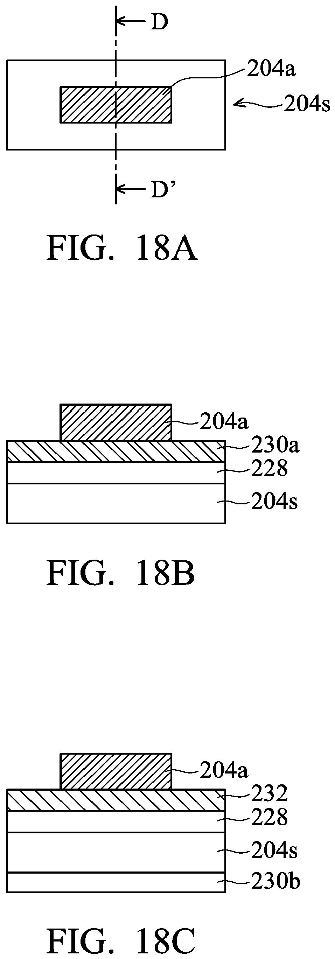

In addition, the first light source component 204 may further include a first circuit connector 204c (as shown in Figs. 17A-17C). A driver device (not shown) may control the first light-emitting elements 204a via the first circuit connector 204c (as shown in Figs. 17A-17C). The first circuit connector 204c may be disposed on the first substrate 204s. The structure and the forming method of the circuit unit and the light source component will be described in detail hereinafter (as shown in Figs. 18A-18I).

Next, referring to Fig. 8, Fig. 8 illustrates a cross-sectional view of the display device 100a along line B-B' in Fig. 7A (the cross-sectional view in the X-Z plane) in accordance with some other embodiments of the present disclosure. The difference between the embodiment shown in Fig. 8 and the embodiment shown in Fig. 7B is that, the display device 100a may further include a second light source component 216. Specifically, the display device 100a may include the second bending portion 210b, the first light source component 204 and the second light source component 216. The first light source component 204 may be disposed on the second bending portion 210b while the second light source component 216 may be disposed adjacent to the second bending portion 210b.

In this embodiment, the second light source component 216 may be disposed corresponding to the structural element 212. In accordance with some embodiments of the present disclosure, the second light source component 216 contacts the structural element 212. In addition, the second light source component 216 may include a plurality of second light-emitting elements 216a. In accordance with some embodiments of the present disclosure, the second light source component 216 is attached to the structural element 212 by at least one second light-emitting element 216a. In accordance with some embodiments of the present disclosure, the second light source component 216 may further include a second substrate 216s, and the second light-emitting element 216a may be disposed on the second substrate 216s. In accordance with some embodiments of the present disclosure, the first light source component 204 is connected to the second light source component 216. Specifically, the second substrate 216s of the second light source component 216 is structurally partially connected to the first substrate 204s of the first light source component 204 (as shown in Fig. 17B and Fig. 17C) so that the second light source component 216 may be disposed corresponding to the structural element 212 by the support of the second bending portion 210b.

The second light source component 216 may further include a second circuit connector 216c (as shown in Fig. 17B and Fig. 17C). A driver device (not shown) may control the second light-emitting element 216a via the second circuit connector 216c. The second circuit connector 216c may be disposed on the second substrate 216s. In addition, the first light-emitting element 204a and the second light-emitting element 216a may be controlled by the first circuit connector 204c and the second circuit connector 216c respectively. In other words, the first circuit connector 204c and the second circuit connector 216c may be independent from each other.

It should be noted that, in this embodiment, the reflection element 210 may be disposed between the light guiding plate 202 and the structural element 212, and the reflection element 210 may be disposed between the first light source component 204 and the second light source component 216. Therefore, the light generated from the first light source component 204 may be separated from the light generated from the second light source component 216 so as to decrease the lights from blending. In such a case, the first light source component 204 corresponding to the light guiding plate 202 may serve as the light source of the display panel 302 of the display device 100a while the second light source component 216 corresponding to the structural element 212 may serve as the additionally decorative or ambient light source of the display device 100a, but it is not limited thereto. In accordance with some embodiments of the present disclosure, the colors of light sources generated from the first light-emitting element 204a and the second light-emitting element 216a may be the same. In some other embodiments, the colors of light sources generated from the first light-emitting element 204a and the second light-emitting element 216a may be different.

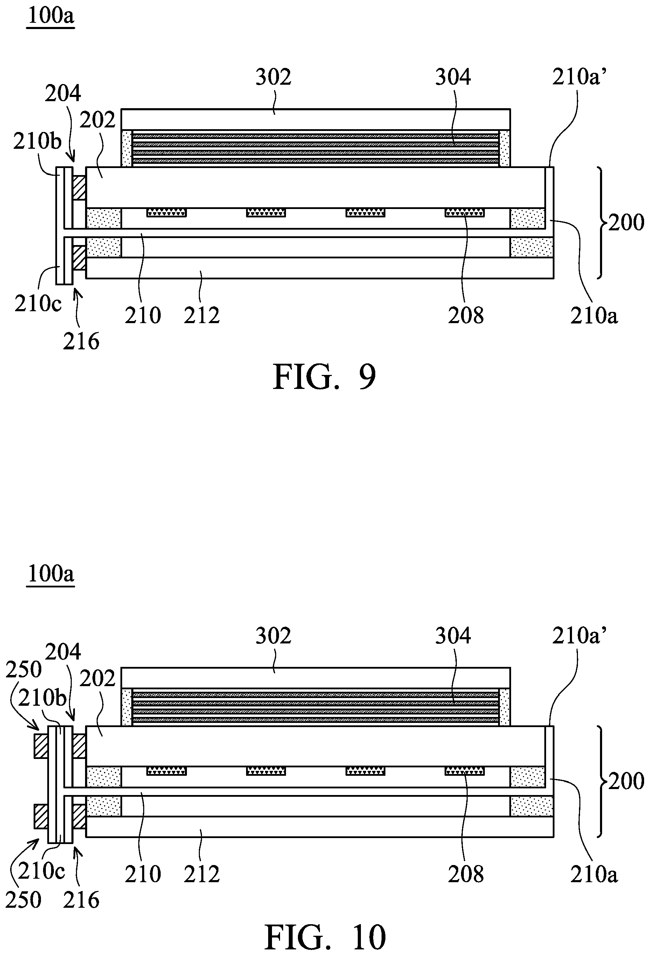

Next, referring to Fig. 9, Fig. 9 illustrates a cross-sectional view of the display device 100a along line B-B' in Fig. 7A (the cross-sectional view in the X-Z plane) in accordance with some other embodiments of the present disclosure. The difference between the embodiment shown in Fig. 9 and the embodiment shown in Fig. 8 is that, the reflection element 210 may further include a third bending portion 210c. The third bending portion 210c may be disposed corresponding to the structural element 212. The third bending portion 210c may be disposed adjacent to the second bending portion 210b.

Moreover, the second light source component 216 may be disposed on the third bending portion 210c. The second light source component 216 may be disposed corresponding to the structural element 212. The second light source component 216 may be disposed between the structural element 212 and the third bending portion 210c of the reflection element 210. In accordance with some embodiments of the present disclosure, the second light source component 216 contacts the structural element 212. In accordance with some embodiments of the present disclosure, the second light source component 216 is disposed adjacent to the first light source component 204.

As described above, since the reflection element 210 may be disposed between the first light source component 204 and the second light source component 216, the light generated from the first light source component 204 may be separated from the light generated from the second light source component 216 so as to decrease the lights from blending. Therefore, the first light source component 204 corresponding to the light guiding plate 202 may serve as the light source of the display panel 302 of the display device 100a while the second light source component 216 corresponding to the structural element 212 may serve as the additionally decorative or ambient light source of the display device 100a, but it is not limited thereto. In accordance with some embodiments of the present disclosure, the colors of light sources generated from the first light-emitting element 204a and the second light-emitting element 216a may be the same. In some other embodiments, the colors of light sources generated from the first light-emitting element 204a and the second light-emitting element 216a may be different.

Next, referring to Fig. 10, Fig. 10 illustrates a cross-sectional view of the display device 100a along line B-B' in Fig. 7A (the cross-sectional view in the X-Z plane) in accordance with some other embodiments of the present disclosure. The difference between the embodiment shown in Fig. 10 and the embodiment shown in Fig. 9 is that, the second bending portion 210b and the third bending portion 210c of the reflection element 210 may include at least one third light component 250 at the side that is away from the light guiding plate 202 and the structural element 212 (also may be considered as the outer side of the second bending portion 210b and the third bending portion 210c). In other words, the third light component 250 and the first light source component 204 may be disposed at the opposite sides of the second bending portion 210b, or the third light component 250 and the second light source component 216 may be disposed at the opposite sides of the third bending portion 210c. That is, the second bending portion 210b may be disposed between the first light source component 204 and the third light component 250. The third bending portion 210c may be disposed between the second light source component 216 and the third light component 250. In one embodiment, the third light component 250 may serve as the additionally decorative or ambient light source of the display device 100a, but it is not limited thereto.

It should be understood that although the third light component 250 includes two light-emitting elements, which respectively correspond to the first light source component 204 and the second light source component 216, disposed thereon in the embodiment shown in Fig .10, any suitable amount of the third light component 250 may be disposed according to the needs in other embodiments. The third light components 250 may be driven together or separately, but it is not limited thereto. In addition, in accordance with some embodiments of the present disclosure, the third light component 250 may be disposed only corresponding to the first light source component 204, or the third light component 250 may be disposed only corresponding to the second light source component 216. The third light component 250 also may be disposed at any suitable position according to the needs.

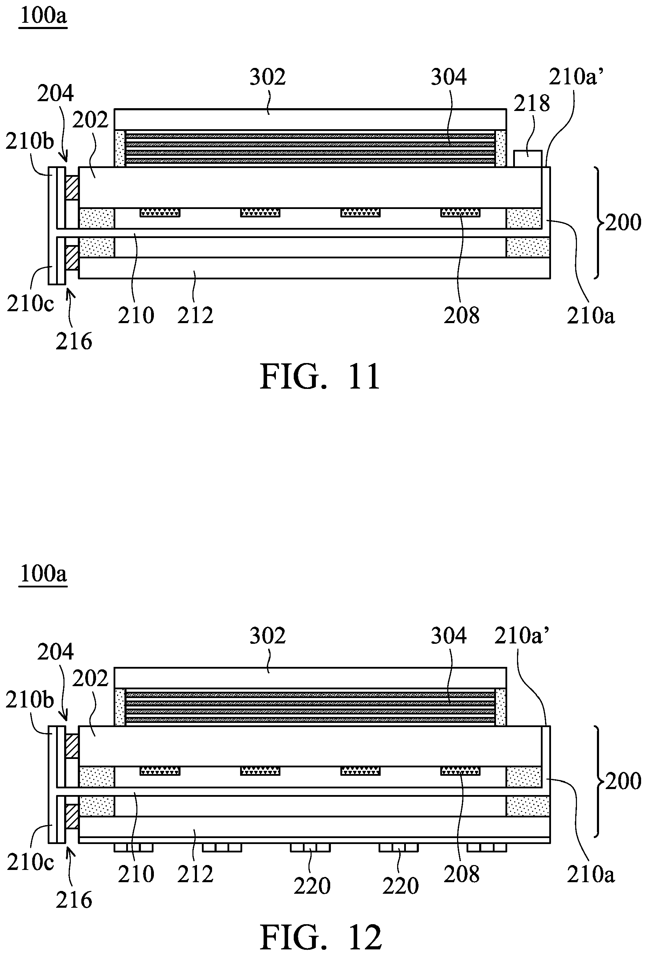

Next, referring to Fig. 11, Fig. 11 illustrates a cross-sectional view of the display device 100a along line B-B' in Fig. 7A (the cross-sectional view in the X-Z plane) in accordance with some other embodiments of the present disclosure. The difference between the embodiment shown in Fig. 11 and the embodiment shown in Fig. 9 is that, the display device 100a further includes an electronic component 218 disposed on the light guiding plate 202. In accordance with some embodiments of the present disclosure, the electronic component 218 may be disposed at the side of the light emitting surface of the light guiding plate 202. In other words, the electronic component 218 may be disposed at the surface of the light guiding plate 202 adjacent to the display panel 302.

The electronic component 218 may include a charge-coupled device (CCD). In accordance with some embodiments of the present disclosure, the electronic component 218 may be, but is not limited to, a digital camera, a video camera, a video recorder, an optical scanner, a sensor or a combination thereof. Any other suitable electronic component may also be used according to the needs. In accordance with some embodiments of the present disclosure, the electronic component 218 may be formed on the light guiding plate 202 by adhesive materials, mechanical elements, or any other suitable method, but it is not limited thereto. In accordance with some embodiments of the present disclosure, the electronic component 218 may be directly formed on the light guiding plate 202. For example, one or more deposition processes, photolithography processes or etching processes may be used to form the electronic component 218. In accordance with some embodiments of the present disclosure, the deposition processes may include, but is not limited to, chemical vapor deposition (CVD), physical vapor deposition (PVD), any other suitable processes, or a combination thereof. For example, the chemical vapor deposition may include low-pressure chemical vapor deposition (LPCVD), low-temperature chemical vapor deposition (LTCVD), rapid-thermal chemical vapor deposition (RTCVD), plasma enhanced chemical vapor deposition (PECVD), atomic layer deposition (ALD) or other suitable processes. Moreover, in accordance with some embodiments of the present disclosure, the photolithography process may include, but is not limited to, photoresist coating (e.g., spin-on coating), soft baking, hard baking, mask aligning, exposure, post-exposure baking, developing the photoresist, rinsing, drying, or other suitable processes. In accordance with some embodiments of the present disclosure, the etching process may include dry etching process, wet etching process, or any other suitable etching process.

Next, referring to Fig. 12, Fig. 12 illustrates a cross-sectional view of the display device 100a along line B-B' in Fig. 7A (the cross-sectional view in the X-Z plane) in accordance with some other embodiments of the present disclosure. The difference between the embodiment shown in Fig. 12 and the embodiment shown in Fig. 9 is that, the display device 100a further includes a decorative element 220 disposed on the surface of the structural element 212 that is away from the light guiding plate 202. In accordance with some embodiments of the present disclosure, the decorative element 220 may include the light-emitting elements with one or more colors to serve as the backlight projection of the display device 100a, but it is not limited thereto. In one embodiment, the decorative element 220 may serve as the additionally decorative or ambient light source of the display device 100a, but it is not limited thereto. The light-emitting element may include, but is not limited to, light-emitting diode (LED), mini light-emitting diode (mini LED), micro light-emitting diode (micro LED), quantum dot (QD) materials, fluorescence materials, phosphor materials, or any other suitable light-emitting element or material. In one embodiment, the chip size of the LED may be in a range from about 300 µm to about 10 mm. The chip size of the mini LED may be in a range from about 100 µm to about 300 µm. The chip size of the micro LED may be in a range from about 1 µm to about 100 µm, but the disclosure is not limited thereto. In accordance with some embodiments of the present disclosure, the decorative element 220 may be disposed on the surface of the structural element 212 that is away from the light guiding plate 202 by a lithography process, an etching process and so on, but is not limited thereto. In accordance with some embodiments of the present disclosure, the decorative element 220 may include a circuit or a pattern formed by the lithography process or an etching process so that the exterior of the display device 100a may possess the effect similar to decoration. In accordance with some embodiments of the present disclosure, the decorative element 220 may include the electronic component 218 as described above to have additional functions according to the needs, but it is not limited thereto. In accordance with some embodiments of the present disclosure, the decorative element 220 may include the combination of at least one abovementioned embodiments according to applications, but it is not limited thereto.

Furthermore, detailed descriptions regarding some of the components of the display device are given as follows with reference to some of the embodiments of the present disclosure.

### The attachment between the light guiding plate and the reflection component

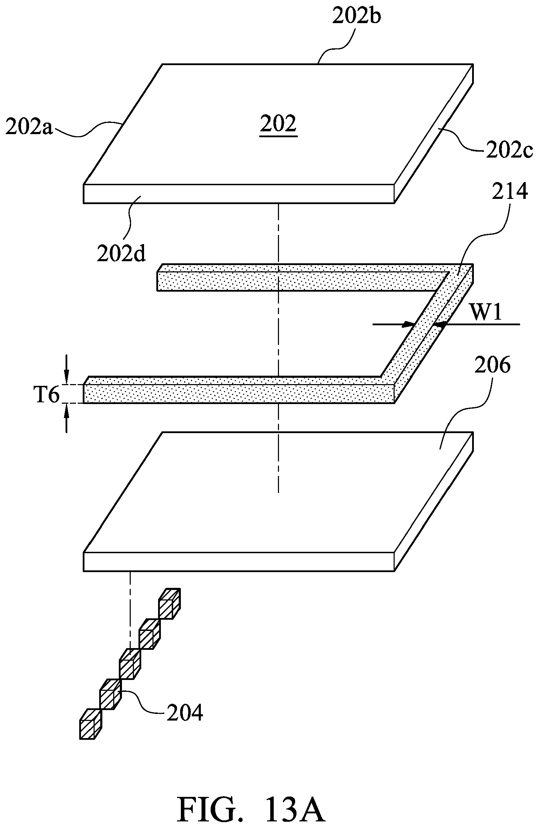

Referring to Fig. 13A, Fig. 13A illustrates the diagram showing the attachment between the light guiding plate 202 and the reflection component 206 in accordance with some embodiments of the present disclosure. The light guiding plate 202 may be attached to the reflection component 206 by the adhesive material 214. The reflection component 206 may be the reflection element 210 or the structural element 212. As described above, the adhesive material 214 may include, but is not limited to, liquid optical gel, solid optical gel, any other suitable material, or a combination thereof. The adhesive material 214 may be, but is not limited to, transparent, black or any suitable color according to the needs.

In accordance with some embodiments of the present disclosure, the adhesive material 214 may be disposed along the direction corresponding to at least one of the second side 202b, the third side 202c and the fourth side 202d of the light guiding plate 202, or a combination thereof. In accordance with some embodiments of the present disclosure, the adhesive material 214 may be disposed along the direction corresponding to the second side 202b, the third side 202c and the fourth side 202d of the light guiding plate 202. In other words, the adhesive material 214 may be disposed between the light guiding plate 202 and the reflection component 206 with a shape of " 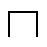 ", The first light source component 204 may be disposed at the first side 202a of the light guiding plate 202. In other words, the first side 202a of the light guiding plate 202 may be considered as the light incident side of the light guiding plate 202. Since the adhesive material 214 may interfere the total reflection of light within the light guiding plate 202, the adhesive material 214 is not disposed at the first side 202a of the light guiding plate 202. Thus, the light will enter into the light guiding plate 202 through the first side 202a (i.e. the light incident side) and be guided within the light guiding plate 202.

In accordance with some embodiments of the present disclosure, the width W1 of the adhesive material 214 may be in a range from about 1 mm to about 10 mm, such as from about 5 mm to about 10 mm. In accordance with some embodiments of the present disclosure, the thickness T6 of the adhesive material 214 may be in a range from about 10 µm to about 500 µm, such as from about 50 µm to about 100 µm. It should be noted that, if the width W1 or the thickness T6 of the adhesive material 214 is too small, for example, if the width W1 is less than 1 mm or the thickness T6 is less than 10 µm, the amount of the adhesive material 214 may be unable to provide sufficient adhesion. Thus, the attachment between the light guiding plate 202 and the reflection component 206 may be ineffective. On the contrary, if the width W1 or the thickness T6 of the adhesive material 214 is too large, for example, if the width W1 is greater than 10 mm or the thickness T6 is greater than 500 µm, a part of the adhesive material 214 may exceed the edges of the light guiding plate 202 or the reflection component 206. Alternatively, such amount of the adhesive material 214 may affect the total reflection within the light guiding plate 202 so that the light source provided by the light guiding plate 202 to the display panel may be uneven. In accordance with some embodiments of the present disclosure, the disposition of the adhesive material 214 may form an air gap between the light guiding plate 202 and the reflection component 206 (especially the reflection element 210). Therefore, influence of the optical properties of the light guiding plate 202 and the reflection component 206 may be reduced.

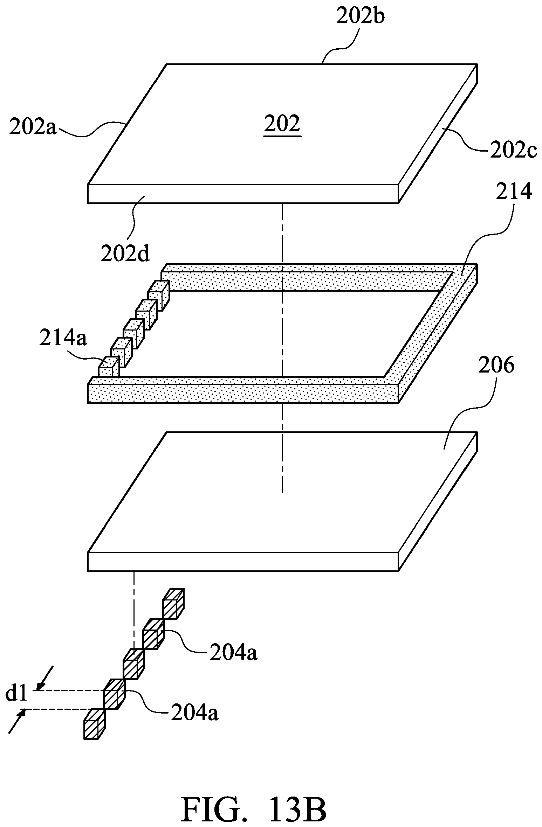

Next, referring to Fig. 13B, Fig. 13B illustrates the diagram showing the attachment between the light guiding plate 202 and the reflection component 206 in accordance with some embodiments of the present disclosure. The difference between the embodiment shown in Fig. 13B and the embodiment shown in Fig. 13A is that, the adhesive material 214 may be disposed between the first side 202a of the light guiding plate 202 and the reflection component 206 with a discontinuous form. Specifically, the adhesive material 214 is disposed between the first side 202a and the reflection component 206 with a plurality of adhesive fragments 214a. In accordance with some embodiments of the present disclosure, the adhesive fragments 214a may be disposed corresponding to the intervals d1 between two adjacent of the first light-emitting elements 204a of the first light source component 204. In other embodiments, the adhesive fragments 214a may be disposed between the reflection component 206 and at least one of the first side 202a, the second side 202b, the third side 202c and the fourth side 202d of the light guiding plate 202. Alternatively, the adhesive fragments 214a may be continuously or discontinuously disposed between the reflection component 206 and at least one of the first side 202a, the second side 202b, the third side 202c and the fourth side 202d of the light guiding plate 202, but it is not limited thereto in the present disclosure. The adhesive material 214 may be disposed in any other suitable way.

### The attachment between the reflection component

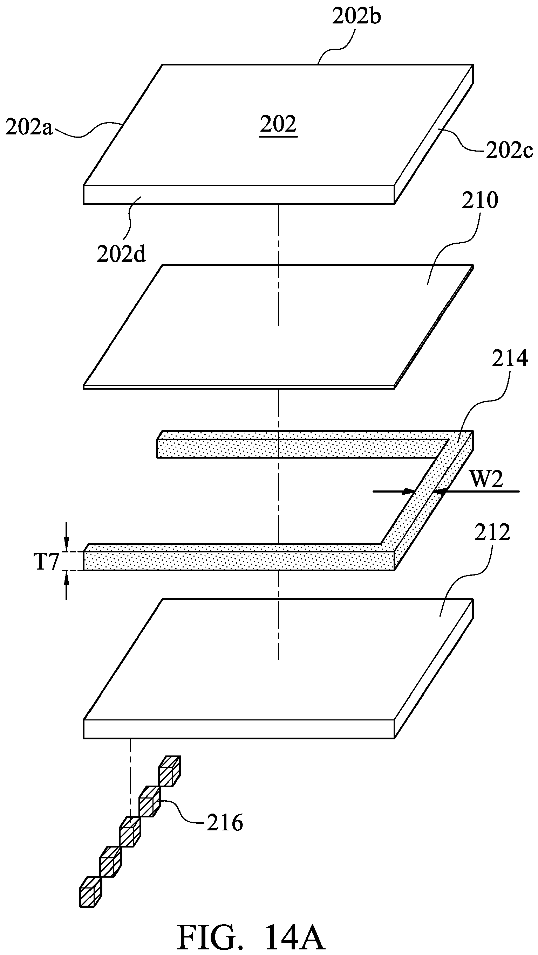

Figs. 14A-14D are diagrams showing the attachment between the reflection element 210 and the structural element 212 of the reflection element 206 in accordance with some embodiments of the present disclosure. It should be understood that the adhesive materials 214 between the light guiding plate 202 and the reflection component 206 (the reflection element 210 in Figs. 14A-14D are omitted for clarity. In addition, although the reflection element 210 is disposed between the light guiding plate 202 and the structural element 212 in the embodiments as shown in figures, the structural element 212 may be disposed between the light guiding plate 202 and reflection element 210 in some other embodiments. The reflection element 210 and the structural element 212 may be attached by the adhesive material 214. As described above, the adhesive material 214 may include, but is not limited to, liquid optical gel, solid optical gel, any other suitable material, or a combination thereof. The adhesive material 214 may be, but is not limited to, transparent, black or any suitable color according to the needs.

In accordance with some embodiments of the present disclosure, the adhesive material 214 may be disposed corresponding to at least one of the first side 202a, second side 202b, the third side 202c and the fourth side 202d of the light guiding plate 202, or a combination thereof. As shown in Fig. 14A, in accordance with some embodiments of the present disclosure, the second light source component 216 is disposed corresponding to the structural element 212 and adjacent to the first side 202a of the light guiding plate 202. The adhesive material 214 may be disposed corresponding to the second side 202b, the third side 202c and the fourth side 202d of the light guiding plate 202. That is, the adhesive material 214 may be disposed between the reflection element 210 and the structural element 212 with a shape of " 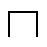 ", but it is not limited thereto.

In accordance with some embodiments of the present disclosure, the width W2 of the adhesive material 214 may be in a rage from about 1 mm to about 10 mm, such as from about 5 mm to about 10 mm. In accordance with some embodiments of the present disclosure, the thickness T7 of the adhesive material 214 may be in a range from about 10 µm to about 500 µm, such as from about 50 µm to about 100 µm. It should be noted that, if the width W2 or the thickness T7 of the adhesive material 214 is too small, for example, if the width W2 is less than 1 mm or the thickness T7 is less than 10 µm, the amount of the adhesive material 214 may be unable to provide sufficient adhesion. Thus, the attachment between the reflection element 210 and the structural element 212 may be ineffective. In addition, the adhesive material 214 disposed between the reflection element 210 and the structural element 212 may enhance the structural support of the reflection component 206 or improve the appearance of the display device.

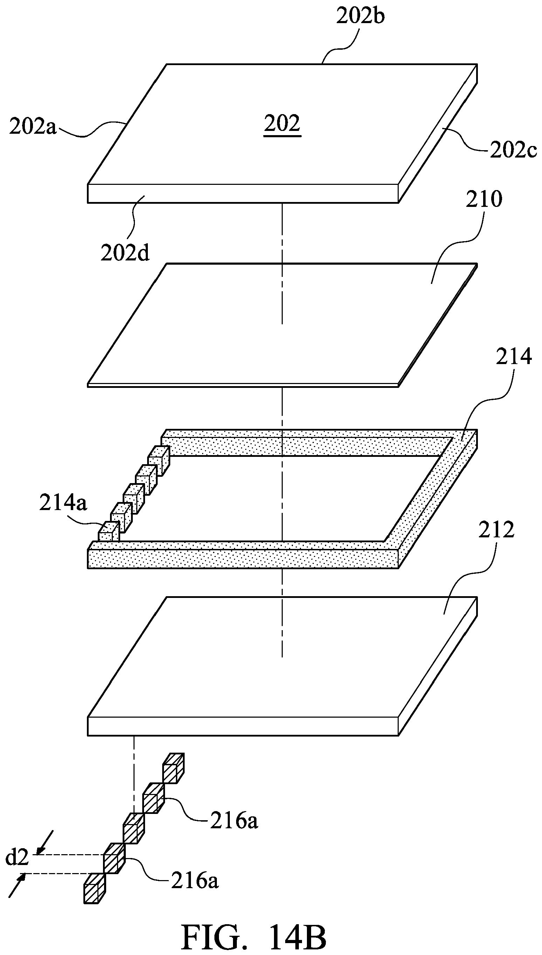

Next, referring to Fig. 14B, Fig. 14B illustrates the diagram showing the attachment between the reflection element 210 and the structural element 212 in accordance with some other embodiments of the present disclosure. The difference between the embodiment shown in Fig. 14B and the embodiment shown in Fig. 14A is that, the adhesive material 214 is disposed between the reflection element 210 and the structural element 212 in a discontinuous manner corresponding to the first side 202a of the light guiding plate 202 in the embodiment shown in Fig. 14B. Specifically, the adhesive material 214 is disposed between the reflection element 210 and the structural element 212 with a plurality of adhesive fragments 214a. In accordance with some embodiments of the present disclosure, the adhesive fragments 214a may be disposed corresponding to the intervals d2 between the second light-emitting elements 216a of the second light source component 216. In other embodiments, the adhesive fragments 214a may be disposed between the reflection component 206 and at least one of the first side 202a, the second side 202b, the third side 202c and the fourth side 202d of the light guiding plate 202. Alternatively, the adhesive fragments 214a may be continuously or discontinuously disposed between the reflection component 206 and at least one of the first side 202a, the second side 202b, the third side 202c and the fourth side 202d of the light guiding plate 202, but it is not limited thereto in the present disclosure. The adhesive material 214 may be disposed in any other suitable way.

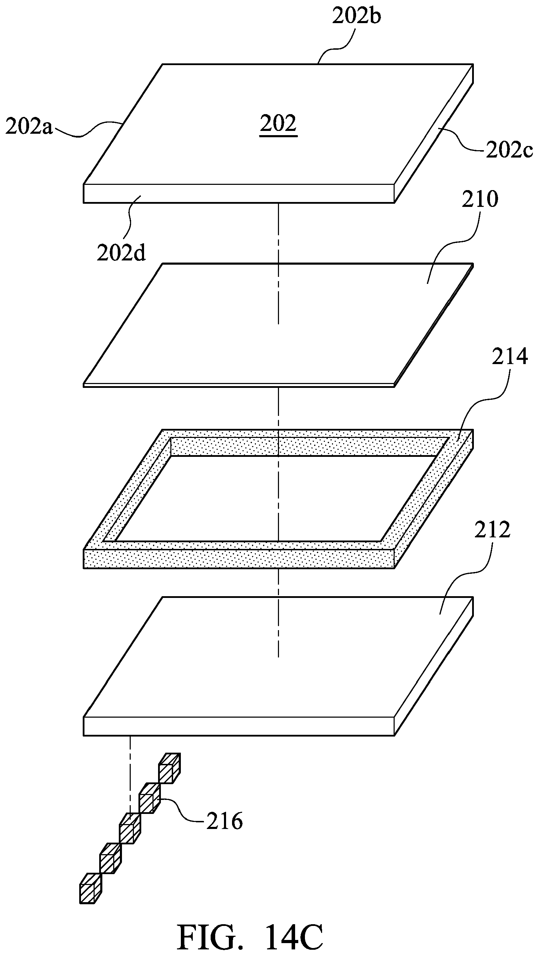

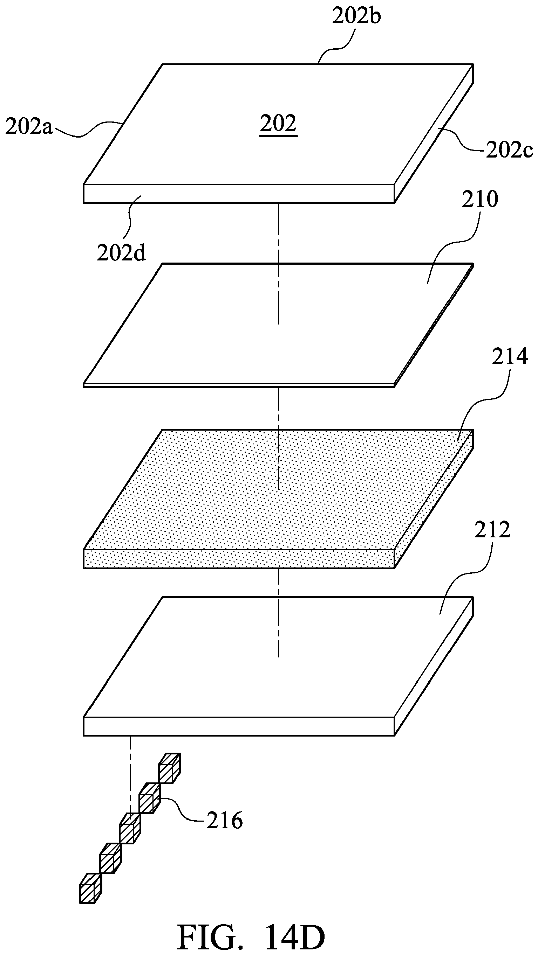

Next referring to Fig. 14C, Fig. 14 illustrates the diagram showing the attachment between the reflection element 210 and the structural element 212 in accordance with some other embodiments of the present disclosure. The difference between the embodiment shown in Fig. 14C and the embodiment shown in Fig. 14A is that, the adhesive material 214 is also disposed corresponding to the first side 202a of the light guiding plate 202. In other words, the adhesive material 214 may be disposed between the reflection element 210 and the structural element 212 with a shape of " 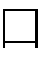 ". In this embodiment, the second light source component 216 is disposed corresponding to the structural element 212, and the second light source component 216 is disposed corresponding to the first side 202a of the light guiding plate 202 (e.g., as shown in Figs. 8-12).

Next referring to Fig. 14D, Fig. 14D illustrates the diagram showing the attachment between the reflection element 210 and the structural element 212 in accordance with some other embodiments of the present disclosure. The difference between the embodiment shown in Fig. 14D and the embodiment shown in Fig. 14A is that, the adhesive material 214 substantially covers the structural element 212 for attachment in the embodiment shown in Fig. 14D. In one embodiment, the area where the adhesive material 214 dispose may be equal to or less than the area of the reflection element 210 and/or the structural element 212, but it is not limited thereto. In one embodiment, a part of the adhesive material 214 may extrude from the edge of the reflection element 210 and/or the structural element 212.

### The bending portion of the reflection element

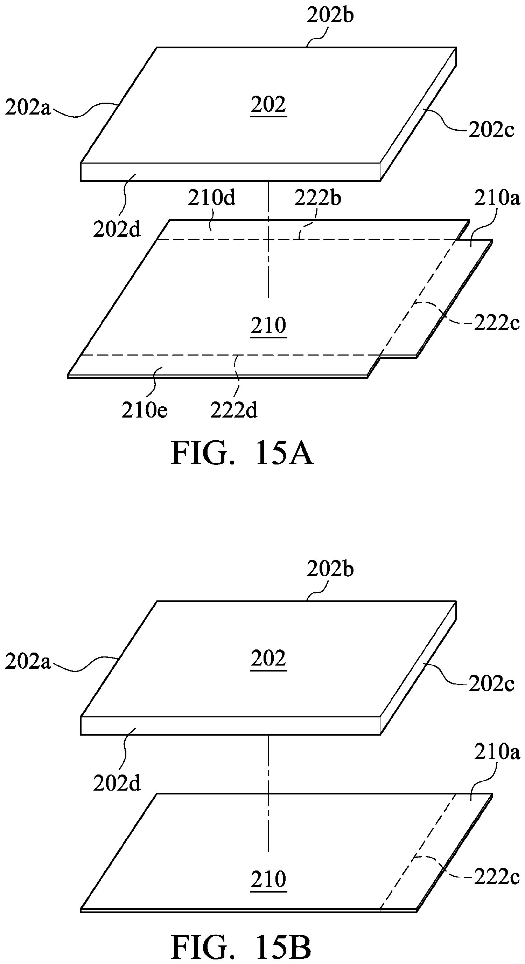

Fig. 15A and Fig. 15B are diagrams showing the bending portion of the reflection element 210in accordance with some embodiments of the present disclosure, i.e. the diagrams showing the bending portion of the reflection element 210 corresponding to the second side 202b, third side 202c and the fourth side 202d of the light guiding plate 202. In accordance with some embodiments of the present disclosure, the bending portion may be formed by forming the sewing line (dotted line in Fig. 15A) on the reflection element 210 and then the reflection element 210 is bent along the sewing line. The bending portion may be attached to the side of the light guiding plate 202 or the structural element 212. The design of sewing line allows the reflection element 210 and the bending portion being integrally formed. The integrally formed bending portion may further simplify the attachment process of the reflection element 210 with other components. In accordance with some embodiments of the present disclosure, the reflection element 210 and the bending portion may be formed separately and then are assembled by using mechanical elements or adhesion, but it is not limited thereto.

Referring to Fig. 15A, in this embodiment, the reflection element 210 may include the sewing line 222b, the sewing line 222c and the sewing line 222d. A fourth bending portion 210d, a fifth bending portion 210e and the first bending portion 210a may be formed by bending the reflection element 210 along the sewing line 222b, the sewing line 222d and the sewing line 222c respectively. The fourth bending portion 210d, the fifth bending portion 210e and the first bending portion 210a may correspond to the second side 202b, the fourth side 202d and the third side 202c of the light guiding plate 202 respectively. As described above, the third side 202c of the light guiding plate 202 may correspond to the side that is away from the light source. Therefore, the first bending portion 210a extending at the third side 202c may decrease light leakage at the third side 202c and substantially improve the brightness or luminance of the panel. In addition, the fourth bending portion 210d and the fifth bending portion 210e also allow the display device having an integrally formed appearance. However, in some other embodiments (for example, as shown in Fig. 15B), only the first bending portion 210a that corresponds to the third side 202c of the light guiding plate 202 is formed. In other words, only the sewing line 222c is formed on the reflection element 210, but it is not limited thereto.

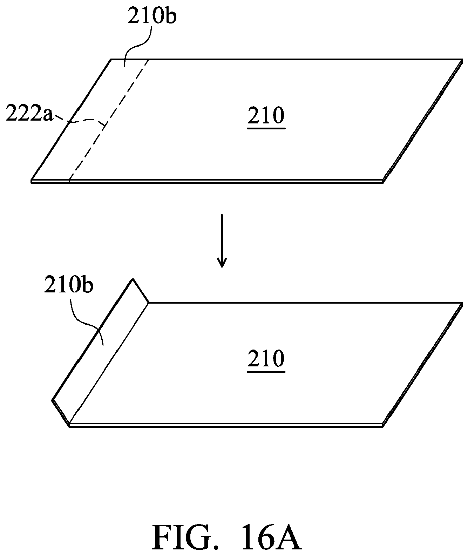

Next referring to Figs. 16A-16C, Figs. 16A-16C are diagrams showing the bending portion of the reflection element 210 at the light incident side of the light guiding plate 202 in accordance with some embodiments of the present disclosure, i.e. the diagrams showing the bending portion of the reflection element 210 corresponding to the first side 202a (such as the second bending portion 210b or the third bending portion 210c as shown in Figs. 7B-12). As shown in Fig. 16A, in accordance with some embodiments of the present disclosure, the sewing line 222a may be formed on the reflection element 210 at the side that is corresponding to the first side 202a of the light guiding plate 202. Then, the reflection element 210 is bent along the sewing line 222a to form the second bending portion 210b. The second bending portion 210b may be disposed opposite to the first side 202a of the light guiding plate 202 (as shown in Fig. 7A and Fig. 7B).

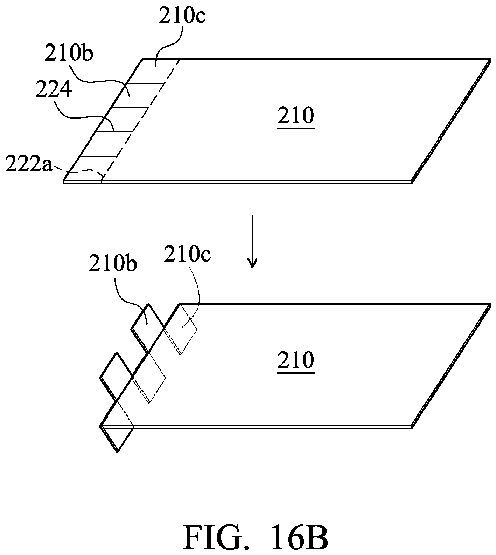

Next, referring to Fig. 16B, in some other embodiments, the sewing line 222a and at least one separating line 224 may be formed on the reflection element 210 at the side that is corresponding to the first side 202a of the light guiding plate 202. The separating line 224 can partially separate the reflection element 210. In accordance with some embodiments of the present disclosure, the separating line 224 may be substantially perpendicular to the sewing line 222a, but it is not limited thereto. In one embodiment, the separating line 224 and the sewing line 222a may have an included angle. Next, the reflection element 210 is bent along the sewing line 222a to form the second bending portion 210b and the third bending portion 210c. In accordance with some embodiments of the present disclosure, two bending portions that are next to the same separating line 226 may be bent toward opposite directions to form the second bending portion 210b and the third bending portion 210c disposed in the opposite directions. In other words, the second bending portion 210b and the third bending portion 210c may be formed alternately, but it is not limited thereto. In some other embodiments, two bending portions that are next to the same separating line 226 may be bent toward the same direction. Alternatively, the separating line 224 may be designed or the bending portion of the reflection element 210 may be bent toward other suitable directions according to the needs. In accordance with some embodiments of the present disclosure, the formed second bending portion 210b and third bending portion 210c may be disposed corresponding to the light guiding plate 202 and the reflection component 206 of the structural element 212 respectively (as shown in Figs. 9-12).

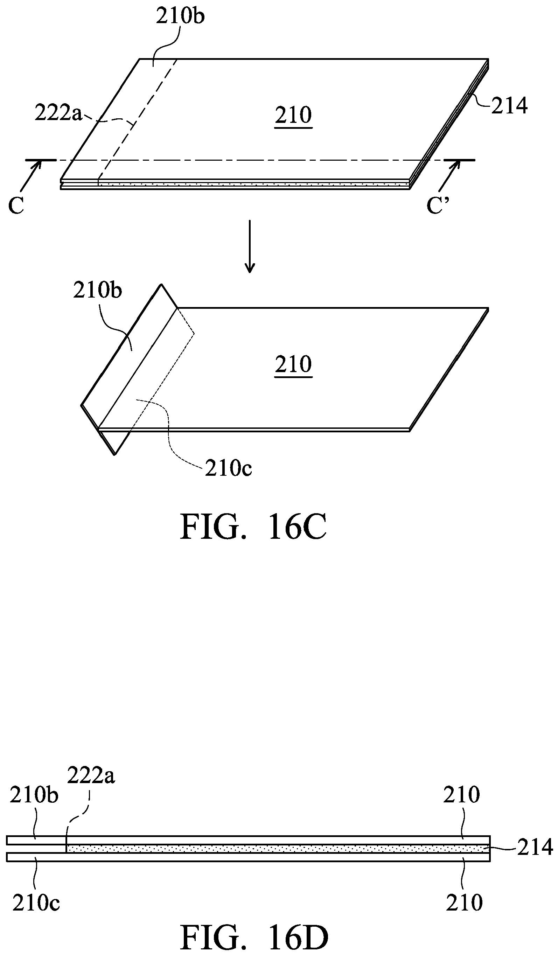

Next, referring to Fig. 16C and Fig. 16D at the same time, Fig. 16C illustrates the diagrams showing the bending portion of the reflection element 210 at the light incident side of the light guiding plate 202 in accordance with some embodiments of the present disclosure. Fig. 16D illustrates a cross-sectional view of the reflection element 210 along line C-C' in Fig. 16C. As shown in Fig. 16C and Fig. 16D, in some other embodiments, two reflection elements 210 may be partially adhered together by the adhesive material 214 to form the second bending portion 210b and the third bending portion 210c. Specifically, the portions of the reflection element 210 that are not adhered together may be bent toward the opposite direction to form the second bending portion 210b and the third bending portion 210c. The adhesive material 214 may be disposed between the two reflection elements 210. In one embodiment, the adhesive material 214 is disposed corresponding to the portion of the reflection elements 210 other than the bending portion. In addition, in accordance with some embodiments of the present disclosure, the formed second bending portion 210b and third bending portion 210c may be disposed opposite to the light guiding plate 202 and the reflection component 206 of the structural element 212 respectively (as shown in Figs. 9-12).

### The light source component

Fig. 17A illustrates a top view of the first light source component 204 in accordance with some embodiments of the present disclosure. As shown in Fig. 17A, the first light source component 204 may include the first substrate 204s, a plurality of first light-emitting elements 204a formed on the first substrate 204s, and the first circuit connector 204c coupled to the first light-emitting elements 204a. In accordance with some embodiments of the present disclosure, the first light source component 204 may have a strip shape, but it is not limited thereto.

As described above, in accordance with some embodiments of the present disclosure, the backlight module 200 may include the first light source component 204 and the second light source component 216 simultaneously. Fig. 17B and

Fig. 17C illustrate the top views of the first light source component 204 and the second light source component 216 in accordance with some embodiments of the present disclosure. Similar to the first light source component 204, the second light source component 216 may include the second substrate 216s, a plurality of second light-emitting elements 216a formed on the second substrate 216s, and the second circuit connector 216c coupled to the second light-emitting elements 216a. The first circuit connector 204c of the first light source component 204 and the second circuit connector 216c of the second light source component 216 may be coupled to the different circuit units to control the first light-emitting elements 204a and the second light-emitting elements 216a separately. In some other embodiments, the first light source component 204 and the second light source component 216 may be collocated with the same or different circuit connectors or circuit units according to the needs.

Furthermore, in accordance with some embodiments of the present disclosure, the first light source component 204 and the second light source component 216 may both have the stripe shape and be at least partially connected to each other in the structure as shown in Fig. 17B. In the embodiment as shown in 17B, the first light source component 204 and the second light source component 216 may be arranged adjacent to each other. Moreover, the first substrate 204s and the second substrate 216s may be connected at two ends. In other words, the first substrate 204s and the second substrate 216s may be integrally formed. Therefore, in this embodiment, the substrate of the light source component may be structurally stable. In addition, there may be a hollow region 226 between the first substrate 204s and the second substrate 216s. In accordance with some embodiments of the present disclosure, the hollow region 226 may be used to accommodate the reflection element 210. In particular, the reflection element 210 may pass through the hollow region 226 to form the bending portion (as shown in Figs. 8-12). In other words, the reflection element 210 may be disposed between the first light source component 204 and the second light source component 216.

Next referring to Fig. 17C, the difference between the embodiment shown in Fig. 17C and the embodiment shown in Fig. 17B is that, the first light source component 204 and the second light source component 216 are fixed together by the adhesive material 214 in the embodiment shown in Fig. 17C. Specifically, the ends of the first light source component 204 and the second light source component 216 are fixed by the adhesive material 214. The hollow region 226 may be formed among the first substrate 204s, the second substrate 216s and the adhesive material 214 to accommodate the reflection element 210 so that the reflection element 210 may be disposed between the first light source component 204 and the second light source component 216. In this embodiment, since the first light source component 204 and the second light source component 216 are attached by the adhesive material 214, the first light source component 204 or the second light source component 216 may be replaced easily and individually when one of them is broken.

The structure of the light source component and the method of forming the light source component will be described as follows. The first light source component 204 is taken as an example in the following description. However, it should be understood that the second light source component 216 may also have the same or similar structure and forming method. Figs. 18B-18I illustrate the partial cross-sectional views of the light source component 204 along line D-D' in Fig. 18A in accordance with some other embodiments of the present disclosure. Referring to Fig. 18A and Fig. 18B, Fig. 18A illustrates the partial enlarged diagram of region M in Fig. 17A, and Fig. 18B illustrates the partial cross-sectional view of the light source component along line D-D' in Fig. 18A. As shown in Fig. 18B, in accordance with some embodiments of the present disclosure, a conductive layer 228 is formed on the first substrate 204s of the first light source component 204, and a reflective layer 230a is formed on the conductive layer 228. In addition, the first light-emitting element 204a is formed on the reflective layer 230a. The conductive layer 228 may provide electrical connection for the light source component 204, but it is not limited thereto.

In accordance with some embodiments of the present disclosure, the material of the first substrate 204s may include, but is not limited to, glass, quartz, sapphire, polycarbonate (PC), polyimide (PI), polyethylene terephthalate (PET), any other suitable material, or a combination thereof. In accordance with some embodiments of the present disclosure, the layers (such as the conductive layer 228, the reflective layer 230a and so on) may be formed on the first substrate 204s by one or more deposition processes, photolithography processes and etching processes, but it is not limited thereto.

In accordance with some embodiments of the present disclosure, the conductive layer 228 may be formed of metals. For example, the material of the conductive layer 228 may include, but is not limited to, copper, aluminum, tungsten, titanium, gold, platinum, nickel, copper alloys, aluminum alloys, tungsten alloys, titanium alloys, gold alloys, platinum alloys, nickel alloys, any other suitable conductive materials, or a combination thereof. In accordance with some embodiments of the present disclosure, the material of the conductive layer 228 may be formed of transparent conductive materials. For example, the material of the conductive layer 228 may include, but is not limited to, indium tin oxide (ITO), tin oxide (SnO), indium zinc oxide (IZO), indium gallium zinc oxide (IGZO), indium tin oxide (ITZO), antimony tin oxide (ATO), antimony zinc oxide (AZO), any other suitable transparent conductive materials, or a combination thereof. The conductive layer 228 may be formed by, but is not limited to, chemical vapor deposition (CVD), sputtering, resistive thermal evaporation, electron beam evaporation, any other suitable processes, or a combination thereof.

In accordance with some embodiments of the present disclosure, the material of the reflective layer 230a may include, but is not limited to, the materials having high reflective features. In accordance with some embodiments of the present disclosure, a layer having a reflective feature may be directly attached to the conductive layer 228 to serve as the reflective layer 230a. In some embodiments, the reflective layer 230a may be formed by, but is not limited to, deposition processes such as chemical vapor deposition (CVD), sputtering, resistive thermal evaporation or electron beam evaporation, or printing processes, any other suitable processes, or a combination thereof.

Next, referring to Fig. 18C, Fig. 18C illustrates the partial cross-sectional view of the light source component along line D-D' in Fig. 18A in accordance with some other embodiments. In this embodiment, the first light source component 204 includes the reflective layer 230b, the first substrate 204s, the conductive layer 228, the insulating layer 232 and the first light-emitting element 204a that are sequentially stacked.

In accordance with some embodiments of the present disclosure, the material of the reflective layer 230b may include metals. For example, the material of the reflective layer 230b may include, but is not limited to, copper (Cu), aluminum (Al), indium (In), ruthenium (Ru), tin (Sn), gold (Au), platinum (Pt), zinc (Zn), silver (Ag), titanium (Ti), nickel (Ni), chromium (Cr), magnesium (Mg), any other suitable metallic reflective materials. In accordance with some embodiments of the present disclosure, the reflective layer 230b may be formed by, but is not limited to, deposition processes such as chemical vapor deposition (CVD), sputtering, resistive thermal evaporation or electron beam evaporation, or printing processes, any other suitable processes, or a combination thereof.

In addition, the insulating layer 232 may provide protection for the conductive layer 228 that is adjacent to the insulating layer 232. In accordance with some embodiments of the present disclosure, the material of the insulating layer 232 may be transparent insulating material or other suitable insulating materials, but it is not limited thereto. In accordance with some embodiments of the present disclosure, the insulating layer 232 may be formed by, but is not limited to, chemical vapor deposition (CVD) or spin coating.

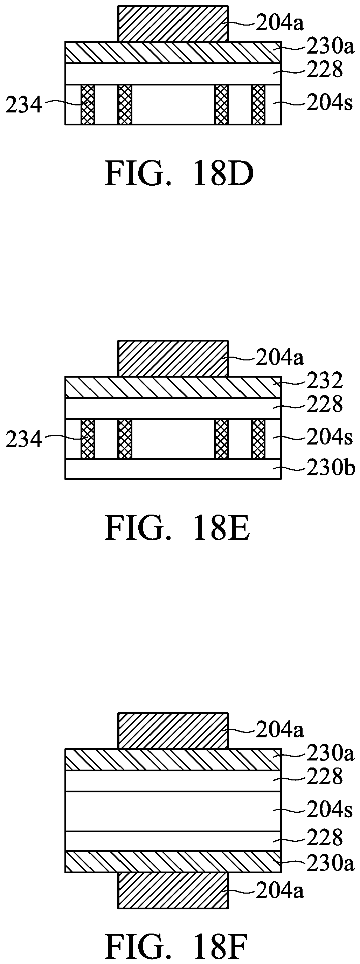

Next, referring to Fig. 18D, Fig. 18D illustrates the partial cross-sectional view of the light source component along line D-D' in Fig. 18A in accordance with some other embodiments. The difference between the embodiment shown in Fig. 18D and the embodiment shown in Fig. 18B is that, the first substrate 204s of the first light source component 204 further includes a plurality of conductive vias 234 in the embodiment shown in Fig. 18D. The conductive vias 234 may be disposed through the first substrate 204s. In accordance with some embodiments of the present disclosure, the conductive vias 234 contact the conductive layer 228. In addition, the conductive vias 234 may promote heat dissipation of the first substrate 204s, but it is not limited thereto.

In accordance with some embodiments of the present disclosure, the material of the via 234 may include, but is not limited to, copper, aluminum, tungsten, titanium, gold, platinum, nickel, copper alloys, aluminum alloys, tungsten alloys, titanium alloys, gold alloys, platinum alloys, nickel alloys, any other suitable conductive materials, or a combination thereof. In accordance with some embodiments of the present disclosure, an opening may be formed in the first substrate 204s first, and then the above metallic materials may fill the openings to form the conductive vias 234, but it is not limited thereto.

Next, referring to Fig. 18E, Fig. 18E illustrates the partial cross-sectional view of the light source component along line D-D' in Fig. 18A in accordance with some other embodiments. The difference between the embodiment shown in Fig. 18D and the embodiment shown in Fig. 18C is that, the light source component further includes the reflective layer 230b in the embodiment shown in Fig. 18E. In particular, the first substrate 204s of the first light source component 204 includes a plurality conductive vias 234. The conductive vias 234 are disposed through the first substrate 204s. The conductive vias 234 contact the conductive layer 228 and the reflective layer 230b.

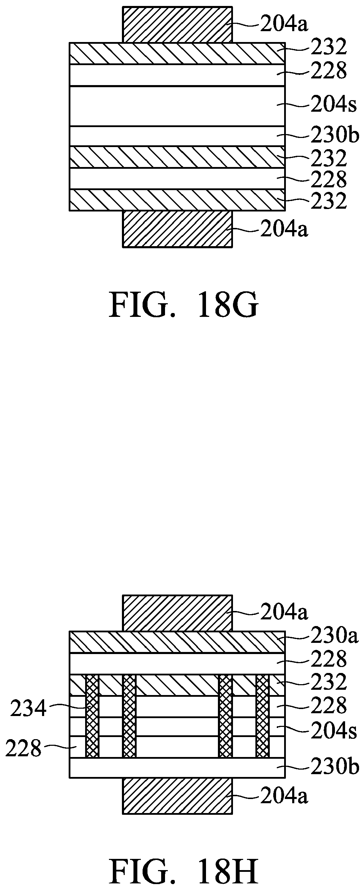

In addition, in accordance with some embodiments of the present disclosure, the layers describe above and the light-emitting element may be formed on the opposite sides of the first substrate 204s of the first light source component 204 simultaneously. For example, refer to the embodiments as shown in Figs. 18F-18I. As shown in Fig. 18F, in accordance with some embodiments of the present disclosure, the conductive layer 228, the reflective layer 230a and the first light-emitting element 204a may be sequentially stacked on the opposite sides of the first substrate 204s separately. In some other embodiments, as shown in Fig. 18G, the conductive layer 228, the insulating layer 232 and the first light-emitting element 204a may be sequentially stacked on one side of the first substrate 204s. In addition, the reflective layer 230b, the insulating layer 232, the conductive layer 228, the insulating layer 232 and the first light-emitting element 204a may be sequentially stacked on another side (i.e. the opposite side) of the first substrate 204s.

In some other embodiments, as shown in Fig. 18H, the conductive layer 228, the insulating layer 232, the conductive layer 228, the reflective layer 230a and the first light-emitting element 204a may be sequentially stacked on one side of the first substrate 204s. In addition, the conductive layer 228, the reflective layer 230b and the first light-emitting element 204a may be sequentially stacked on another side (i.e. the opposite side) of the first substrate 204s. Moreover, the conductive vias 234 may be further disposed in this structure. For example, in accordance with some embodiments of the present disclosure, the conductive vias 234 that are through the first substrate 204s, the conductive layer 228, the insulating layer 232 or a combination thereof may be formed. In accordance with some embodiments of the present disclosure, the conductive vias 234 that are sequentially through the conductive layer 228, the first substrate 204s, the conductive layer 228 and the insulating layer 232 may be formed.

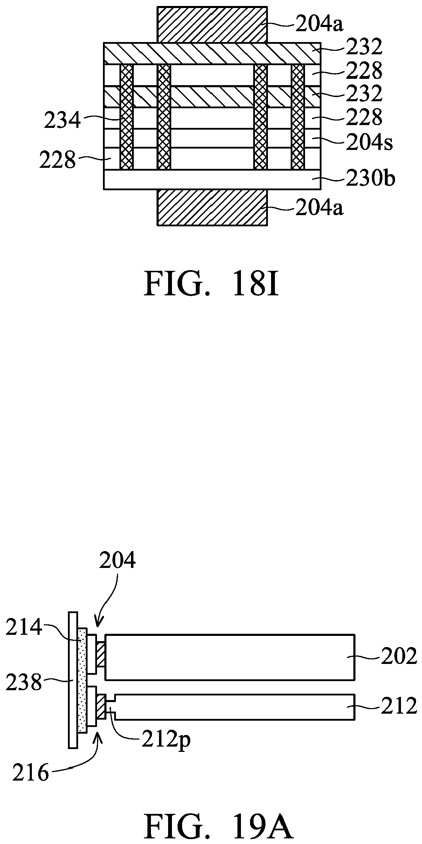

Furthermore, in some other embodiments, as shown in Fig. 18I, the conductive layer 228, the insulating layer 232, the conductive layer 228, the insulating layer 232 and the first light-emitting element 204a may be sequentially stacked on one side of the first substrate 204s. In addition, the conductive layer 228, the reflective layer 230b and the first light-emitting element 204a may be sequentially stacked on another side (i.e. the opposite side) of the first substrate 204s. Moreover, the conductive vias 234 may be further disposed in this structure. For example, in accordance with some embodiments of the present disclosure, the conductive vias 234 that are through the first substrate 204s, the conductive layer 228, the insulating layer 232 or a combination thereof may be formed. In accordance with some embodiments of the present disclosure, the conductive vias 234 that are sequentially through the conductive layer 228, the first substrate 204s, the conductive layer 228, the insulating layer 232 and the conductive layer 228 may be formed.

As shown in the embodiments as shown in Fig. 18H and 18I, the manufacturing process of the first light source component 204 may be simplified. In addition, in these embodiments, the first substrate 204s may have the first light-emitting elements 204a at both sides. Therefore, the first light-emitting elements 204a may serve as the light source of the display panel and the additional decorative or ambient light source respectively (as shown in Fig. 10).

### The attachment methods of the light source component and the light guiding plate

Figs. 19A-19D are diagrams showing the attachment between the light source component and the light guiding plate 202 in accordance with some embodiments of the present disclosure. The exemplary attachments of the light guiding plate 202, the structural element 212, the first light source component 204 and the second light source component 216 in accordance with some embodiments will be described.

Specifically, as shown in Fig. 19A, in accordance with some embodiments of the present disclosure, the structural element 212 that is adjacent to the light guiding plate 202 may include a protruding portion 212p. In this embodiment, the light guiding plate 202 and the protruding portion 212p of the structural element 212 may be against on one side of the first light source component 204 and the second light source component 216 respectively while another side of the first light source component 204 and the second light source component 216 may be adhered to a mechanical component 238 by the adhesive material 214. The light guiding plate 202 and the first light source component 204, or the structural element 212 and the second light source component 216 may be attached thereby. The mechanical component 238 may be, but is not limited to, a case, a heat sink or a bracket of the display device. As described above, in accordance with some embodiments of the present disclosure, the protruding portion 212p of the structural element 212 may contact the second light-emitting element 216a or the second substrate 216s of the second light source component 216.

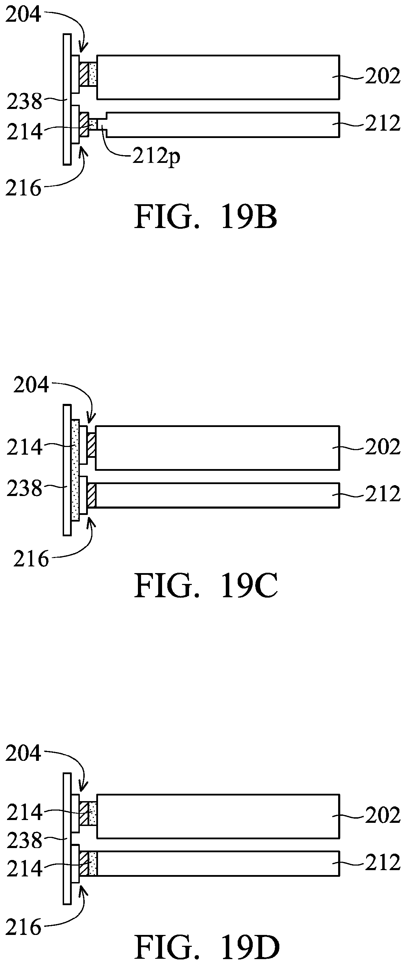

Next, referring to Fig. 19B, the difference between the embodiment shown in Fig. 19B and the embodiment shown in Fig. 19A is that, the light guiding plate 202 and the protruding portion 212p of the structural element 212 are adhered to the first light source component 204 and the second light source component 216 respectively by the adhesive material 214. Another side of the first light source component 204 and the second light source component 216 may be against to the mechanical component 238, but it is not limited thereto. In addition, it should be understood that although the protruding portion 212p is formed on the structural element 212 in the embodiments as shown in Fig. 19A and Fig. 19B, the protruding portion 212p may formed on the light guiding plate 202 in some other embodiments.

Next, referring to Fig. 19C, in some other embodiments, each of the light guiding plate 202 and the structural element 212 may include a planar portion. The light guiding plate 202 and the structural element 212 may be against on one side of the first light source component 204 and the second light source component 216 by the planar portions respectively. In addition, for example, another side of the first light source component 204 and the second light source component 216 may be adhered to the mechanical component 238 by using the adhesive material 214. The light guiding plate 202 and the first light source component 204, or the structural element 212 and the second light source component 216 may be attached thereby.

Next referring to Fig. 19D, the difference between the embodiment shown in Fig. 19D and the embodiment shown in Fig. 19C is that, the planar portions of the light guiding plate 202 and the structural element 212 may adhere to one side of the first light source component 204 and the second light source component 216 by the adhesive material 214 respectively. In addition, another side of the first light source component 204 and the second light source component 216 maybe against to the mechanical component 238, but it is not limited thereto.

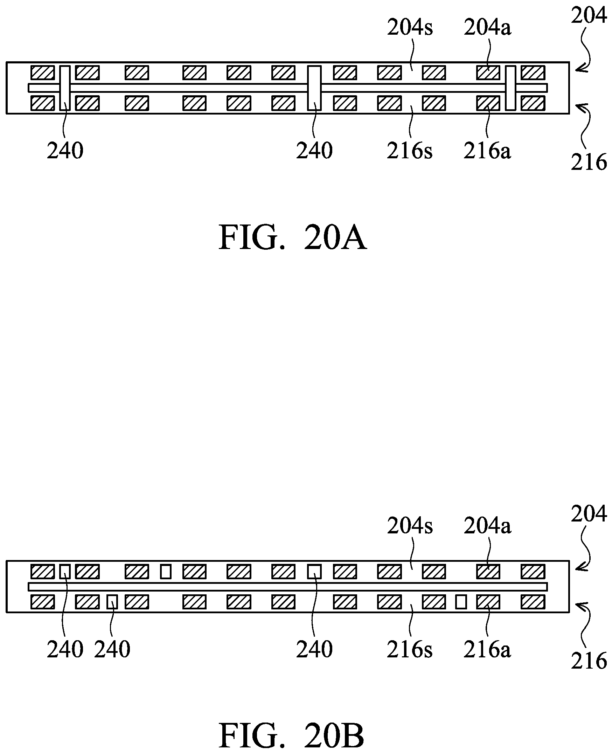

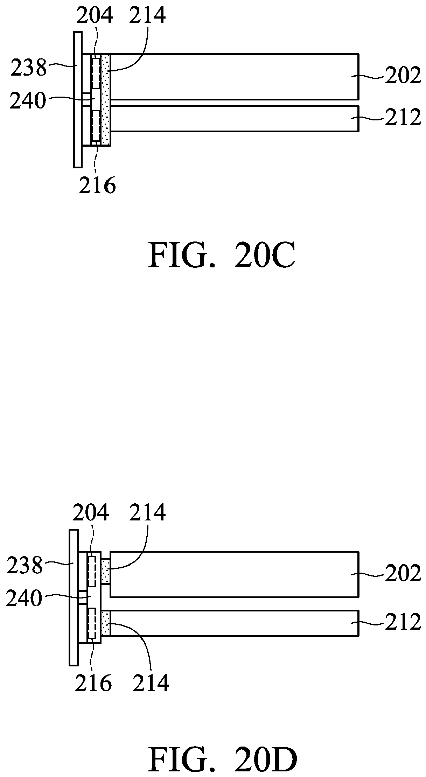

Fig. 20A illustrates the top view of the first light source component 204 and the second light source component 216 in accordance with some embodiments of the present disclosure. As shown in Fig. 20, in accordance with some embodiments of the present disclosure, the first light source component 204 and the second light source component 216 may further include a plurality of blocking elements 240 formed thereon. Specifically, the blocking elements 240 may be disposed on the first substrate 204s and/or the second substrate 216s. In accordance with some embodiments of the present disclosure, as shown in Fig. 20A, the blocking element 240 may be disposed between the first light-emitting elements 204a and between the second light-emitting elements 216a. In other words, the blocking element 240 may be disposed across the first light source component 204 and the second light source component 216. In some other embodiments, the blocking elements 240 may be disposed on the first light source component 204 and the second light source component 216 separately (as shown in Fig. 20B). Moreover, in accordance with some embodiments of the present disclosure, the blocking element 240 and the first light-emitting element 204a may be disposed alternately and/or the blocking element 240 and the second light-emitting element 216a maybe disposed alternately.

The blocking element 240 may serve as a buffer element between the light source component and other components (such as the light guiding plate 202 or the structural element 212) during the assembly so as to reduce the impact on the structure of the components. In accordance with some embodiments of the present disclosure, the first light source component 204 is attached to the first side 202a of the light guiding plate 202 by at least one blocking element 240. In accordance with some embodiments of the present disclosure, the second light source component 216 is attached to the structural element 212 by at least one blocking element 240. In addition, it should be understood that, although the blocking element 240 has a rectangular shape in the embodiment shown in Fig. 20A, the blocking element 240 may have any other shapes or sizes that are suitable for assembly in some other embodiments.

Fig. 20C and Fig. 20D are diagrams showing the attachment between the light source component and the light guiding plate 202 in accordance with some embodiments of the present disclosure. Referring to Fig. 20C, in this embodiment, the light guiding plate 202 and the structural element 212 may be attached by adhering the planar portions thereof to the blocking elements 240 of the first light source component 204 and the second light source component 216 (such as the blocking elements 240 in Fig. 20A) with the adhesive material 214. In addition, another side of the first light source component 204 and the second light source component 216 may be against to the mechanical component 238, but it is not limited thereto.

Next, referring to Fig. 20D, the difference between the embodiment shown in Fig. 20D and the embodiment shown in Fig. 20C is that, the planar portions of the light guiding plate 202 and the structural element 212 may be separately adhered to the blocking elements 240 of the first light source component 204 and the second light source component 216 (such as the blocking elements 240 as shown in Fig. 20A) in the embodiment shown in Fig. 20D. In some other embodiments, the planar portions of the light guiding plate 202 and the structural element 212 may be separately adhered to the blocking elements 240 of the first light source component 204 or the second light source component 216 (such as the blocking elements 240 as shown in Fig. 20B). However, it should be understood that although the light guiding plate 202 and the structural element 212 may be adhered to the blocking elements 240 of the first light source component 204 and/or the second light source component 216 by their planar portions in the embodiments as shown in Fig. 20C and Fig. 20D, in some other embodiments, the light guiding plate 202 and the structural element 212 may each have a shape or region that is complementary to a part of the blocking element 240, and the light guiding plate 202 and the structural element 212 may adhere to or be against to the blocking element 240 of the first light source component 204 and/or the second light source component 216 with such a complementary shape or region, but it is not limited thereto.

As summarized above, the light guiding plate, the light source component and the reflection component in the backlight module provided in the present disclosure may be attached and disposed by the method as shown in the embodiments so that the components such as the side frame, front frame or back panel and so on of the display device may be omitted. Therefore, the display device formed of the backlight module may be lighter and thinner or have an integrally formed appearance. In addition, in accordance with some embodiments of the present disclosure, the backlight module may include various designs of the light source component or the exterior element so that the light source component not only may serve as a light source of the display panel but also may serve as a decorative light or an ambient light. Moreover, the light source of the display panel and the ambient light source may be driven separately and not affected by the other.

In addition, the present disclosure also provides various aspects showing the method of forming or assembling the backlight module component so as to simplify the processing difficulty or reduce the cost of manufacture. It should be understood that some of the components of the display device such as the case, heat sink or bracket and so on are omitted in the figures for clarify. It should be understood that the components described above may be arranged in any suitable way that is known in the art. In some other embodiments, at least partial reflection element, at least partial structural element, at least partial light guiding plate, at least partial light source component or at least partial decorative layer may selectively serve as the exterior element, and the case may not be disposed according to the needs, but it is not limited thereto.

Although some embodiments of the present disclosure and their advantages have been described in detail, it should be understood that various changes, substitutions and alterations can be made herein without departing from the spirit and scope of the disclosure as defined by the appended claims. For example, it will be readily understood by one of ordinary skill in the art that many of the features, functions, processes, and materials described herein may be varied while remaining within the scope of the present disclosure. Moreover, the scope of the present application is not intended to be limited to the particular embodiments of the process, machine, manufacture, composition of matter, means, methods and steps described in the specification. As one of ordinary skill in the art will readily appreciate from the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

## Claims

1. A backlight module (200), comprising:
a light guiding plate (202) having a first side, a second side, a third side and a fourth side, wherein the first side is disposed opposite to the third side, and the second side is disposed opposite to the fourth side;
a first light source component (204) disposed adjacent to the first side of the light guiding plate; and
a reflection component disposed (206) opposite to the light guiding plate, wherein the first light source component is attached to the light guiding plate or the reflection component.

2. The backlight module as claimed in claim 1, wherein the first light source component comprises a first substrate (204s) and a plurality of first light-emitting elements (204a) disposed on the first substrate, wherein the first light source component is attached to the first side of the light guiding plate by at least one of the plurality of first light-emitting elements.

3. The backlight module as claimed in any of the claims 1 to 2, wherein the first light source component comprises a first substrate (204s), a plurality of first light-emitting elements (204a) disposed on the first substrate and a plurality of first blocking elements (240) disposed on the first substrate, and the plurality of first blocking elements (240) and the plurality of first light-emitting elements are arranged alternately, wherein the first light source component is attached to the first side of the light guiding plate by at least one of the plurality of first blocking elements.

4. The backlight module as claimed in any of the claims 1 to 3, wherein the first light source component comprises a first substrate and a plurality of first light-emitting elements disposed on the first substrate, and the first substrate has a first surface and a second surface opposite to the first surface, wherein the plurality of first light-emitting elements are disposed on the first surface and the second surface.

5. The backlight module as claimed in any of the claims 1 to 4, wherein the light guiding plate is attached to the reflection component by an adhesive material,
and preferably p wherein the adhesive material is disposed corresponding to at least one of the second side, the third side and the fourth side of the light guiding plate.

6. The backlight module as claimed in any of the claims 1 to 5, wherein the reflection component comprises a reflection element (210) and a structural element (212) disposed opposite to the reflection element,
and preferably, wherein the reflection element is attached to the structural element by an adhesive material,
and /or, wherein the reflection element comprises at least one first bending portion, the at least one first bending portion is disposed opposite to the first side of the light guiding plate, and the first light source component is disposed on the at least one first bending portion.

7. The backlight module as claimed in claim 6, further comprising a second light source component (216), wherein the second light source component is disposed corresponding to the structural element, and
preferably wherein the second light source component comprises a second substrate and a plurality of second light-emitting elements disposed on the second substrate, wherein the second light source component is attached to the structural element by at least one of the plurality of second light-emitting elements and/or
wherein the second light source component comprises a second substrate, a plurality of second light-emitting elements disposed on the second substrate and a plurality of second blocking elements disposed on the second substrate, and the plurality of second blocking elements and the plurality of second light-emitting elements are arranged alternately, wherein the second light source component is attached to the structural element by at least one of the plurality of second blocking elements .

8. The backlight module as claimed in claim 7, wherein the first light source component is connected to the second light source component (216).

9. The backlight module as claimed in claim 7 or 8, wherein the reflection element comprises at least one second bending portion (210b), the at least one second bending portion is disposed opposite to the structural element, and the second light source component is disposed on the at least one second bending portion.

10. The backlight module as claimed in claim 7 to 9, wherein the reflection element has a decorative pattern.

11. The backlight module as claimed in any of the claims 1 to 9, further comprising an electronic component disposed on the light guiding plate.

12. A display device (100, 100a), comprising:
a backlight module (200), comprising:
a light guiding plate having a first side, a second side, a third side and a fourth side, wherein the first side is disposed opposite to the third side, and the second side is disposed opposite to the fourth side;
a first light source component disposed adjacent to the first side of the light guiding plate; and
a reflection component disposed opposite to the light guiding plate, wherein the first light source component is attached to the light guiding plate or the reflection component; and
a display panel, wherein the light guiding plate is disposed between the display panel and the reflection component.

13. The display device as claimed in claim 12, wherein the reflection component comprises a reflection element and a structural element disposed opposite to the reflection element, wherein the reflection element comprises at least one bending portion, and
preferably wherein the structural element is disposed between the light guiding plate and the reflection element, and the at least one bending portion of the reflection element extends to the third side of the light guiding plate,
and/or
wherein the reflection element is disposed between the light guiding plate and the structural element, and the at least one bending portion of the reflection element extends to the third side of the light guiding plate.

14. The display device as claimed in claim 12 or 13, wherein the backlight module further comprises a second light source component, wherein the second light source component is disposed corresponding to the structural element.

15. The display device as claimed in any of the claims 12 to 14, wherein the reflection element is disposed between the first light source component and the second light source component.
